# EUROPÄISCHE PATENTSCHRIFT

(11) **EP 3 844 064 B1**
(45) Veröffentlichungstag und Bekanntmachung des Hinweises auf die Patenterteilung: **10.04.2024**
(21) Anmeldenummer: 19765189.6
(22) Anmeldetag: 28.08.2019
(51) Int. Cl.: B64D 11/06, B60N 2/22, B60N 2/30, B60N 2/18, B60N 2/02

(54) **FLUGZEUGSITZVORRICHTUNG**
AIRCRAFT SEAT DEVICE
DISPOSITIF DE SIÈGE D'AVION

(30) Priorität: 28.08.2018 DE 102018120995
(43) Veröffentlichungstag der Anmeldung: 07.07.2021
(73) Patentinhaber: Recaro Aircraft Seating GmbH & Co. KG, 74523 Schwäbisch Hall (DE)
(72) Erfinder: KUGLER, Kai-Uwe, 71560 Sulzbach/Murr (DE)
(74) Vertreter: Daub, Thomas
(86) Internationale Anmeldenummer: PCT/EP2019/072964
(87) Internationale Veröffentlichungsnummer: WO 2020/043776

(56) Entgegenhaltungen:
- WO-A1-2017/037017
- US-A1- 2002 043 851
- US-A1- 2003 209 929
- US-A1- 2010 308 619
- US-A1- 2015 307 194
- US-B2- 9 975 454

## Beschreibung

### Stand der Technik

Die Erfindung betrifft eine Flugzeugsitzvorrichtung nach dem Oberbegriff des Patentanspruchs 1.

Die Druckschrift US 2002/043851 A1 offenbart eine Flugzeugsitzvorrichtung, mit wenigstens einer Aufständereinheit, mit wenigstens einer mit der Aufständereinheit gekoppelten Rückenlehne, mit zumindest einem, mit der Aufständereinheit und/oder der Rückenlehne gekoppelten Sitzboden, und mit wenigstens einem Kinematikmodul, das dazu vorgesehen ist, die Rückenlehne zwischen zumindest einer normalen, im Wesentlichen aufrechten Sitzposition, einer Komfortposition und einer von der aufrechten Sitzposition unterschiedlichen aufrechten Sonderposition zu verstellen, in der die Rückenlehne zumindest in einem Teilbereich nach vorne verstellt ist, wobei die Rückenlehne von der aufrechten Sitzposition entweder manuell oder über einen von einem Bordpersonal bedienbaren Motor in die aufrechte Sonderposition verstellt werden kann.

Die Druckschrift US 9,975, 454 B2 offenbart eine Flugzeugsitzvorrichtung mit einer Aufständereinheit und einem damit über ein Kinematikmodul beweglich gelagerten Sitzboden.

Die Druckschrift US 2003/209929 A1 offenbart eine Flugzeugsitzvorrichtung mit einer Aufständereinheit und einem damit über ein Kinematikmodul beweglich gelagerten Sitzboden.

Die Druckschrift US 2015/307194 A1 offenbart eine Flugzeugsitzvorrichtung mit einer Aufständereinheit und einem damit über ein Kinematikmodul beweglich gelagerten Sitzboden.

Die Druckschrift WO 2017/037017 A1 offenbart eine Flugzeugsitzvorrichtung, mit wenigstens einer Aufständereinheit, mit wenigstens einer mit der Aufständereinheit gekoppelten Rückenlehne, mit zumindest einem, mit der Aufständereinheit und/oder der Rückenlehne gekoppelten Sitzboden, und mit wenigstens einem Kinematikmodul, das dazu vorgesehen ist, die Rückenlehne zwischen zumindest einer normalen, im Wesentlichen aufrechten Sitzposition und einer Komfortposition zu verstellen, wobei das Kinematikmodul dazu vorgesehen ist, die Rückenlehne und den Sitzboden in eine von einer aufrechten Sitzstellung verschiedenen Sonderstellung zu klappen, die als eine Verstaustellung ausgebildet ist.

Die Druckschrift US 2010/308619 A1 offenbart eine Flugzeugsitzvorrichtung mit einer Aufständereinheit und einem damit über ein Kinematikmodul beweglich gelagerten Sitzboden.

Die Aufgabe der Erfindung besteht insbesondere darin, eine gattungsgemäße Vorrichtung mit verbesserten Eigenschaften hinsichtlich Komfort und Raumbedarf bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung, mit wenigstens einer Aufständereinheit, mit wenigstens einer mit der Aufständereinheit gekoppelten Rückenlehne, mit zumindest einem, mit der Aufständereinheit und/oder der Rückenlehne gekoppelten Sitzboden, und mit wenigstens einem Kinematikmodul, das dazu vorgesehen ist, die Rückenlehne zwischen zumindest einer normalen, im Wesentlichen aufrechten Sitzposition und einer Komfortposition zu verstellen, wobei das Kinematikmodul dazu vorgesehen ist, die Rückenlehne in wenigstens einem Betriebszustand in eine weitere, von der aufrechten Sitzposition unterschiedliche aufrechte Sonderposition zu verstellen, in der die Rückenlehne zumindest in einem Teilbereich im Vergleich zu der normalen aufrechten Sitzposition nach vorne verstellt ist.

Es wird vorgeschlagen, dass das Kinematikmodul dazu vorgesehen ist, die Rückenlehne in einem unbenutzten Betriebszustand selbsttätig in die aufrechte Sonderposition zu verstellen. Unter einer "Flugzeugsitzvorrichtung" soll insbesondere eine Vorrichtung verstanden werden, die zumindest einen Teil oder einen gesamten Flugzeugsitz ausbildet. Unter einem "Flugzeugsitz" soll insbesondere Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Der Flugzeugsitz ist dazu vorgesehen auf einer Aufständerebene aufgeständert, also montiert zu werden. Die Aufständerebene ist vorzugsweise von einem Kabinenboden einer Flugzeugkabine ausgebildet. Unter einer "Aufständereinheit" soll insbesondere eine Einheit verstanden werden, mittels der der Sitz auf einer Aufständerebene aufgeständert ist. Die Aufständereinheit bildet insbesondere ein tragendes Gestell des Sitzes aus. Die Aufständereinheit umfasst insbesondere zumindest wenigstens zwei Sitzfüße, mehrere Fittings, über die die Sitzfüße jeweils mit einer Befestigungsschiene einer Flugzeugkabine fest verbindbar sind, zumindest einen Querträger, der mit den Sitzfüßen gekoppelt ist und/oder wenigstens zwei Sitzteiler, die mit dem wenigstens einen Querträger und/oder den Sitzfüßen verbunden sind und über die die Rückenlehne und/oder der Sitzboden an die Aufständereinheit angebunden sind. Unter einem "Sitzboden" soll insbesondere eine Einheit verstanden werden, die den Sitzbereich für einen Passagier ausbildet, wobei der Sitzboden dabei vorzugsweise von einem Grundkörper und einem auf dem Grundkörper angebrachten Polster gebildet ist. Unter einem "Sitzbereich" soll dabei insbesondere ein Bereich des Sitzes verstanden werden, der dazu vorgesehen ist, dass ein Passagier, insbesondere während eines Flugs, darauf sitzt. Unter einer "Rückenlehne" soll insbesondere eine Einheit des Sitzes verstanden werden, die eine Rückenlehnenauflagefläche ausbildet, an der ein auf dem Sitz sitzender Passagier seinen Rücken anlehnen kann. Dabei umfasst die Rückenlehne vorzugsweise zumindest einen Grundkörper und ein Polster, welches die Rückenlehnenauflagefläche ausbildet. Die Rückenlehne ist dabei an einem hinteren Ende des Sitzbodens angeordnet und erstreckt sich von dem Sitzboden nach oben, von der Aufständereinheit weg. Der Sitzboden und die Rückenlehne sind vorzugsweise zueinander beweglich ausgebildet, insbesondere zueinander verschwenkbar und/oder zueinander verschiebbar. Unter einem "Kinematikmodul" soll insbesondere ein Modul aus zumindest einer Kinematik und/oder einem Mechanismus verstanden werden, die und/oder der dazu vorgesehen ist, den Flugzeugsitz zwischen unterschiedlichen Stellungen, insbesondere einer normalen Sitzstellung, einer Komfortstellung und zumindest einer weiteren, aufrechten Sonderstellung zu verstellen. Das Kinematikmodul ist zur Verstellung des Flugzeugsitzes zwischen den unterschiedlichen Stellungen insbesondere dazu vorgesehen, die Rückenlehne und/oder den Sitzboden zwischen zumindest zwei Positionen, insbesondere einer normalen aufrechten Sitzposition, einer Komfortposition und/oder einer weiteren, aufrechten Sonderposition zu verstellen. Das Kinematikmodul umfasst zur Verstellung der Rückenlehne und/oder des Sitzbodens des Flugzeugsitzes wenigstens ein Schwenklager und/oder ein Linearlager über die die Rückenlehne und/oder der Sitzboden verschwenkt und/oder axial verschiebbar relativ zu der Aufständereinheit und der Aufständerebene angeordnet sind. Unter einer "normalen Sitzstellung" soll insbesondere eine aufrechte Sitzstellung des Flugzeugsitzes verstanden werden, die aus Sicherheitsgründen, insbesondere in einer Startphase, in einer Landephase und während Turbulenzen, eingenommen werden muss. Die normale Sitzstellung ist dabei als eine sogenannte TTL-Stellung (Taxi, Takeoff, Landing) ausgebildet. Dabei stehen in der normalen Sitzstellung die Rückenlehne und der Sitzboden des Fluggastsitzes im Wesentlichen senkrecht aufeinander, vorzugsweise in einem Winkel von zwischen 95 Grad und 115 Grad. Unter einer "Komfortstellung" soll insbesondere eine nach hinten geneigte Sitzstellung des Flugzeugsitzes verstanden werden, in dem insbesondere die Rückenlehne und der Sitzboden entgegen einer Sitzrichtung des Flugzeugsitzes geneigt sind, wodurch einem auf dem Flugzeugsitz sitzenden Passagier eine komfortable, nach hinten geneigte Sitzposition ermöglicht wird. In der Komfortstellung können die Rückenlehne und der Sitzboden insbesondere einen anderen, insbesondere vorteilhaft einen größeren Winkel zueinander aufweisen als in der aufrechten Sitzstellung (TTL-Stellung). Unter einer "weiteren, aufrechten Sonderstellung" soll insbesondere eine Stellung des Flugzeugsitzes verstanden werden, die vorzugsweise nicht zum dauerhaften Sitzen für einen Passagier vorgesehen ist, wobei der Flugzeugsitz insbesondere eine kleinere Erstreckung in Sitzrichtung aufweist und/oder eine vorteilhaftere Position für einen Einstieg eines Passagiers bietet als in der normalen Sitzstellung (TTL-Stellung). Vorzugsweise weist der Flugzeugsitz in der aufrechten Sonderstellung eine steilere Ausrichtung auf als in der normalen Sitzstellung (TTL-Stellung). Es ist ebenso denkbar, dass in der aufrechten Sonderstellung die Rückenlehne des Flugzeugsitzes im Unterschied zu der aufrechten Sitzstellung nach vorne verschoben ist. In der aufrechten Sonderstellung weist der Flugzeugsitz in Sitzrichtung eine möglichst geringe Erstreckung auf, insbesondere die Rückenlehne erstreckt sich vorzugsweise von ihrem Anbindungspunkt an die Aufständereinheit nur minimal, vorzugsweise nicht, nach hinten (entgegen der Sitzrichtung). Der Flugzeugsitz ist in der aufrechten Sonderstellung von einem Passagier noch immer benutzbar, insbesondere zum Hinsetzten auf den Flugzeugsitz. In der aufrechten Sonderposition ist der Sitzboden des Flugzeugsitzes zumindest im Wesentlichen frei und insbesondere nicht von einem Flugzeugsitzbauteil, wie beispielsweise insbesondere der Rückenlehne, überdeckt. Unter einer "normalen, im Wesentlichen aufrechten Sitzposition der Rückenlehne" soll insbesondere eine Sitzposition der Rückenlehne in der normalen Sitzstellung des Flugzeugsitzes (TTL-Stellung) verstanden werden. In der normalen Sitzposition schließt die Rückenlehne mit ihrer Rückseite einen Winkel von 105 Grad mit der Aufständerebene ein. Unter einer "Komfortposition der Rückenlehne" soll dabei insbesondere eine Position der Rückenlehne verstanden werden, in der die Rückenlehne des Flugzeugsitzes eine aus einer normalen, aufrechten Sitzposition nach hinten verschwenkte Neigung aufweist, die einem Passagier eine vorteilhaft komfortable, nicht aufrechte Sitzposition ermöglicht. Die Rückenlehne schließt in der Komfortposition einen Winkel im Bereich von 105 Grad - 150 Grad, vorzugsweise von 120 Grad mit der Aufständerebene ein. Unter einer "weiteren aufrechten Sonderposition der Rückenlehne" soll insbesondere eine Position der Rückenlehne verstanden werden, in der die Rückenlehne des Flugzeugsitzes aus einer normalen, aufrechten Sitzposition nach vorne verstellt ist. Dabei ist es denkbar, dass die Rückenlehne verschwenkt, insbesondere nach vorne verschwenkt ist. Die Rückenlehne ist in der aufrechten Sonderstellung zumindest um 3 Grad, vorzugsweise zumindest um 5 Grad und besonders bevorzugst zumindest 8 Grad aus der aufrechten Sitzposition nach vorne verschwenkt. Es ist ebenso denkbar, dass die Rückenlehne in der aufrechten Sonderposition im Unterschied zu der aufrechten Sitzposition linear nach vorne verschoben ist, insbesondere ohne dass ein Winkel der Rückenlehne relativ zu der Aufständerebene verändert wird. Dabei ist es insbesondere denkbar, dass die Rückenlehne bei einer Verstellung in die aufrechte Sonderposition um zumindest 50 mm, vorzugsweise um zumindest 150 mm nach vorne relativ zu der Aufständereinheit verschoben wird. Grundsätzlich ist es auch denkbar, dass die Rückenlehne in der aufrechte Sonderposition im Unterschied zu der aufrechten Sitzposition sowohl linear nach vorne verschoben, als auch relativ zu der Aufständerebene verschwenkt ist. In der Sonderposition weist die Rückenlehne insbesondere einen Winkel zu der Aufständerebene auf, der näher bei 90 Grad liegt als in der normalen aufrechten Sitzstellung. Die Rückenlehne ist insbesondere in der aufrechten Sonderstellung des Flugzeugsitzes in der aufrechten Sonderposition angeordnet. Unter der Wendung "nach vorne" soll insbesondere in Sitzrichtung des Flugzeugsitzes verstanden werden. Unter "zumindest in einem Teilbereich nach vorne verstellt" soll insbesondere verstanden werden, dass zumindest ein Teil der Rückenlehne, insbesondere ein oberer Bereich der Rückenlehne im Vergleich zu der normalen aufrechten Sitzposition nach vorne, also in Sitzrichtung bewegt, insbesondere verschwenkt und/oder linear verschoben ist. Bei einer linearen Verschiebung der Rückenlehne ist die Rückenlehne vorzugsweise im Gesamten nach vorne verschoben. Bei einer Verschwenkung nach vorne ist insbesondere der obere Bereich, insbesondere ein Bereich oberhalb einer Rückenlehnenlagerstelle, mittels der die Rückenlehne schwenkbar an der Aufständereinheit angeordnet ist, nach vorne verstellt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft ein Flugzeugsitz bereitgestellt werden, der in einem Nichtgebrauchszustand in einer Längsrichtung weniger Raumbedarf aufweist, wodurch insbesondere bei einem Einstieg und/oder Ausstieg für Passagiere, die hinter dem Flugzeugsitz sitzen mehr Raum bereitgestellt werden kann. Zudem kann durch die erfindungsgemäße Ausgestaltung vorteilhat ein Flugzeugsitz bereitgestellt werden, der in einer Nichtgebrauchsposition eine für ein Hinsetzten des Passagiers vorteilhafte Ausrichtung und Positionierung der Rückenlehne und/oder des Sitzbodens aufweist, durch die ein Hinsetzen für den Passagier erleichtert wird. Dadurch kann vorteilhaft ein Komfort für den auf dem Flugzeugsitz sitzenden Passagier als auch ein Komfort für den hinter dem Flugzeugsitz sitzenden Passagier erhöht werden, insbesondere wenn auf dem vorderen Flugzeugsitz kein Passagier sitzt.

Des Weiteren wird vorgeschlagen, dass die Rückenlehne in der aufrechten Sonderposition steiler ausgerichtet ist als in der normalen aufrechten Sitzposition. Unter der Wendung, dass die "Rückenlehne steiler ausgerichtet ist", soll insbesondere verstanden werden, dass ein Winkel der mit der Aufständerebene eingeschlossen wird, näher bei 90 Grad liegt, als in einer weniger steilen Ausrichtung. Dadurch kann die Rückenlehne in der aufrechten Sonderposition besonders einfach mit zumindest einem Teilbereich nach vorne verstellt werden.

Weiter wird vorgeschlagen, dass das Kinematikmodul dazu vorgesehen ist, die Rückenlehne in der aufrechten Sonderposition im Wesentlichen senkrecht zu einer Aufständerebene auszurichten. Unter "im Wesentlichen senkrecht" soll insbesondere verstanden werden, dass die Rückenlehne nahezu orthogonal, vorzugsweise exakt orthogonal zu der Aufständerebene ausgerichtet ist. Die Rückenlehne schließt in ihrer Wesentlichen senkrechten Ausrichtung einen Winkel von 85 Grad bis 95 Grad, vorzugsweise genau 90 Grad mit der Aufständerebene ein. Dadurch kann die Rückenlehne in der Sonderposition besonders vorteilhaft, insbesondere platzsparend ausgerichtet werden.

Ferner wird vorgeschlagen, dass das Kinematikmodul dazu vorgesehen ist, den Sitzboden zwischen zumindest einer normalen, im Wesentlichen aufrechten Sitzposition und einer Komfortposition zu verstellen, wobei das Kinematikmodul dazu vorgesehen ist, den Sitzboden in wenigstens einem Betriebszustand in eine weitere, von der aufrechten Sitzposition unterschiedliche aufrechte Sonderposition zu verstellen, in der der Sitzboden zumindest verschwenkt ist, wobei das Kinematikmodul dazu vorgesehen ist, den Sitzboden bei einer Verstellung von der normalen aufrechten Sitzposition in die aufrechte Sonderposition in seiner Höhe und/oder seinem Winkel relativ zu einer Aufständerebene zu verstellen. Unter "in seiner Höhe verstellen" soll insbesondere verstanden werden, dass ein Abstand des Sitzbodens, insbesondere ein Abstand gemessen an der Sitzfläche des Sitzbodens relativ zu der Aufständerebene verstellt wird. Unter "in seinem Winkel verstellen" soll insbesondere verstanden werden, dass eine Ausrichtung des Sitzbodens, insbesondere eine Ausrichtung der Sitzfläche des Sitzbodens relativ zu der Aufständerebene, insbesondere in einer Sitzrichtung verändert wird. Bei einer Verstellung des Winkels des Sitzbodens wird insbesondere eine Neigung des Sitzbodens in Sitzrichtung des Flugzeugsitzes verändert. Vorzugsweise ist der Sitzboden in der aufrechten Sonderposition im Unterschied zu der aufrechten Sitzposition nach vorne verschwenkt, sodass ein vorderes Ende des Sitzbodens niedriger angeordnet und ein hinteres Ende des Sitzbodens höher angeordnet ist als in in der normalen Sitzposition. Dadurch kann insbesondere ein Hinsetzen auf dem Sitzboden erleichtert werden. Dadurch kann der Sitzboden in zumindest einem Betriebszustand in dem kein Passagier auf dem Flugzeugsitz sitzt in eine für das Hinsitzen vorteilhafte Stellung gebracht werden.

Es wird weiterhin vorgeschlagen, dass das Kinematikmodul dazu vorgesehen ist, die Rückenlehne und/oder den Sitzboden in einem unbenutzten Betriebszustand selbsttätig in die aufrechte Sonderposition zu verstellen. Unter einem "unbenutzten Betriebszustand" soll insbesondere ein Betriebszustand verstanden werden, in dem niemand auf dem Flugzeugsitz sitzt, also insbesondere keine Sitzkraft (Gewichtskraft) eines Passagiers auf den Sitzboden und/oder die Rückenlehne des Flugzeugsitzes wirkt. Unter "selbsttätig verstellen" soll insbesondere verstanden werden, dass eine Verstellung frei von einer aktiven Betätigung eines Passagiers erfolgt. Dadurch kann die Flugzeugsitzvorrichtung besonders benutzerfreundlich ausgebildet werden.

Des Weiteren wird vorgeschlagen, dass das Kinematikmodul dazu vorgesehen ist, die Rückenlehne und/oder den Sitzboden bei einem Hinsetzten eines Passagiers automatisch in die eine normale, im Wesentlichen aufrechten Sitzposition zu verstellen. Dadurch kann die Flugzeugsitzvorrichtung besonders benutzerfreundlich und intuitiv ausgebildet werden.

Weiterhin wird vorgeschlagen, dass das Kinematikmodul einen Betätigungsmechanismus aufweist, der zur Verstellung der Rückenlehne und/oder des Sitzbodens zwischen der normalen Sitzposition und der weiteren aufrechten Sonderposition vorgesehen ist. Unter einem "Betätigungsmechanismus" soll insbesondere ein Mechanismus verstanden werden, der eine Verstellkraft zur Verstellung der Rückenlehne und/oder des Sitzbodens entsprechend auf die Rückenlehne und/oder den Sitzboden ausübt. Der Betätigungsmechanismus weist dazu vorzugsweise eine Mechanik eine Aktuatorik und/oder eine Elektronik auf, die eine Betätigungskraft und/oder ein Betätigungssignal in die Verstellkraft zur Verstellung der Rückenlehne und/oder des Sitzbodens bereitstellt. Vorzugsweise ist der Betätigungsmechanismus dazu vorgesehen, eine Kraft, insbesondere eine von einer Person auf einen Flugzeugsitz, insbesondere den Sitzboden und/oder die Rückenlehne ausgeübte Sitzkraft, in eine Verstellkraft umzuwandeln. Dabei ist es insbesondere ebenso denkbar, dass die eine Kraft, insbesondere eine von einer Person auf einen Flugzeugsitz, insbesondere den Sitzboden und/oder die Rückenlehne ausgeübte Sitzkraft, als Betätigungskraft ausgebildet ist, die beispielsweise den Betätigungsmechanismus freigibt. Grundsätzlich ist es ebenso denkbar, dass die Verstellkraft von einem als Aktuator, der beispielsweise als Gasdruckfeder oder Elektromotor ausgebildet sein kann, bereitgestellt wird. Dabei kann eine Betätigungskraft zur Auslösung des Aktuators durch eine Kraft, insbesondere eine von einer Person auf einen Flugzeugsitz, insbesondere den Sitzboden und/oder die Rückenlehne ausgeübte Sitzkraft, gebildet werden. Grundsätzlich ist es ebenso denkbar, dass eine Betätigungskraft durch ein anderes Betätigungsmittel, wie beispielsweise einen Bowdenzug oder einen Druckknopf bereitgestellt wird. Grundsätzlich ist es ebenso denkbar, dass ein elektrisches oder elektronisches Signal zur Auslösung eines Aktuators des Betätigungsmechanismus vorgesehen ist. Vorzugsweise weist der Betätigungsmechanismus zur Rückstellung der Rückenlehne und/oder des Sitzbodens ein selbsttätiges Aktuatorelement, wie insbesondere ein Federelement auf, das eine Rückstellkraft für die Rückenlehne und/oder den Sitzboden bereitstellt. Dadurch kann die Rückenlehne und/oder der Sitzboden besonders einfach verstellt werden.

Außerdem wird vorgeschlagen, dass der Betätigungsmechanismus zur Verstellung des der Rückenlehne und/oder des Sitzbodens von der Komfortposition in die weitere aufrechte Sonderposition vorgesehen ist. Dadurch kann die Verstellung der Rückenlehne und/oder des Sitzbodens besonders einfach erfolgen.

Es wird weiter vorgeschlagen, dass der Betätigungsmechanismus als ein selbsttätiger Mechanismus ausgebildet ist, der zumindest durch eine auf den Sitzboden wirkende Sitzkraft und/oder durch eine auf die Rückenlehne wirkende Kraft betätigt wird. Unter einem "selbsttätigen Mechanismus" soll insbesondere ein Mechanismus verstanden werden, der zumindest in eine Verstellrichtung dazu vorgesehen ist, die Rückenlehne und/oder den Sitzboden vorzugsweise ohne eine Bedienung durch einen Passagier in eine entsprechende Position zu bringen, insbesondere in die entsprechende normale aufrechte Sitzposition. Dabei verstellt der selbsttätige Mechanismus die Rückenlehne und/oder den Sitzboden vorzugsweise zumindest teilweise mittels der von einer Person auf den Flugzeugsitz aufgebrachten Sitzkraft. Grundsätzlich wäre es auch denkbar, dass der selbsttätige Mechanismus lediglich durch die von einer Person auf den Flugzeugsitz aufgebrachte Sitzkraft entriegelt wird und eine Verstellung aktiv durch einen Aktuator gesteuert und/oder unterstützt wird. Unter einer "Sitzkraft" soll insbesondere eine Gewichtskraft verstanden werden, die ein Passagier durch Sitzen auf dem Flugzeugsitz, insbesondere auf dem Sitzboden, in den Sitzboden und damit den Flugzeugsitz einleitet. Unter einer "auf die Rückenlehne wirkende Kraft" soll insbesondere eine Kraft verstanden werden, die auf die Rückenlehne, vorzugsweise entgegen der Sitzrichtung auf die Rückenlehne einwirkt. Insbesondere ist die auf die Rückenlehne wirkende Kraft zur Betätigung des Betätigungsmechanismus vorzugsweise von einem Teil einer Gewichtskraft eines auf dem Flugzeugsitz sitzenden Passagiers ausgebildet, die er an der Rückenlehne, beispielsweise insbesondere beim Hinsetzten abstützt. Dadurch kann der Betätigungsmechanismus besonders einfach und intuitiv zu betätigen ausgebildet werden.

Zudem wird vorgeschlagen, dass das Kinematikmodul eine Reclineeinheit aufweist, die dazu vorgesehen ist, die Rückenlehne und/oder den Sitzboden zwischen der normalen aufrechten Sitzposition in die Komfortposition zu verstellen. Unter einer "Reclineeinheit" soll insbesondere eine Einheit, insbesondere eine Mechanik verstanden werden, die insbesondere zur Verstellung der Rückenlehne und/oder des Sitzbodens zwischen seinen Sitzstellungen, also insbesondere der aufrechten Sitzstellung und der Komfortstellung vorgesehen ist. Die Reclineeinheit ist vorzugsweise von einem Passagier aktiv bedienbar, insbesondere durch ein Bedienelement, das bei Betätigung eine Verstellung der Rückenlehne und/oder des Sitzbodens frei gibt. Eine Verstellung der Rückenlehne und/oder des Sitzbodens durch die Reclineeinheit ist dabei insbesondere während eines Normalbetriebs, insbesondere auch wenn ein Passagier auf dem Flugzeugsitz sitzt möglich. Dadurch kann eine Reclinefunktion, also eine Verstellung der Rückenlehne und/oder des Sitzbodens zwischen der normalen aufrechten Sitzstellung und der Komfortstellung einfach erfolgen.

Weiter wird vorgeschlagen, dass die Reclineeinheit und der Betätigungsmechanismus des Kinematikmoduls zumindest teilweise einstückig miteinander ausgebildet sind. Unter "zumindest teilweise einstückig" soll insbesondere verstanden werden, dass zumindest Teile der beiden Einheiten von einem gleichen und gemeinsamen Bauteil oder einer Bauteilgruppe ausgebildet sind. Dadurch kann das Kinematikmodul besonders vorteilhaft ausgebildet werden.

Ferner wird vorgeschlagen, dass das Kinematikmodul zumindest eine Rückenlehnenaufschlagssicherungsvorrichtung aufweist, die durch eine teilweise Entkopplung der Rückenlehne von einem Sitzbauteil dazu vorgesehen ist, Aufschlagskräfte auf die Rückenlehne zumindest in einem Crashfall zumindest teilweise zu reduzieren. Unter einer "Rückenlehnenaufschlagssicherungsvorrichtung" soll insbesondere eine Vorrichtung verstanden werden, die dazu vorgesehen ist, in einem Crashfall eine Bewegung, vorzugsweise insbesondere eine Verschwenkung der Rückenlehnen, zuzulassen, um Aufschlagskräfte durch einen Passagier zu verringern oder zu verhindern. Unter einem "Sitzbauteil" soll dabei insbesondere ein Bauteil eines Flugzeugsitzes verstanden werden, wie insbesondere ein Sitzgestell oder ein Teil einer festen Struktur des Flugzeugsitzes, wie ein Querrohr. Grundsätzlich ist es auch denkbar, dass das Sitzbauteil als ein anderes, dem Fachmann als sinnvoll erscheinendes Bauteil, insbesondere als ein tragendes Bauteil eines Flugzeugsitzes, ausgebildet ist. Unter einer "teilweisen Entkopplung" soll dabei insbesondere verstanden werden, dass eine Bewegung der Rückenlehne und eine Bewegung des Sitzbauteils zumindest für eine definierte Zeit und/oder über eine definierte Verfahrstrecke voneinander getrennt werden, sodass sich die Rückenlehne über eine definierte Zeit und/oder über eine definierte Verfahrstrecke zu dem Sitzbauteil bewegen kann. Unter "Aufschlagskräften" sollen dabei Kräfte verstanden werden, die von Objekten, wie insbesondere von einem Körper eines auf dem Flugzeugsitz sitzenden Passagiers, bei Auftreffen auf ein Element, wie insbesondere die Rückenlehne, entstehen. Unter einem "Crashfall" soll dabei insbesondere ein Überlastfall verstanden werden, also ein Betriebszustand, in dem Kräfte auf die Flugzeugsitzvorrichtung und/oder den Flugzeugsitz, dessen Teil die Flugzeugsitzaufständervorrichtung ist, wirken, die größer sind als Kräfte, die durch eine normale Belastung bei einem normalen Flugbetrieb entstehen. Dadurch kann das Kinematikmodul besondere vorteilhaft ausgebildet und um ein Sicherheitsfeature für den Flugzeugsitz erweitert werden.

Zudem wird vorgeschlagen, dass das Kinematikmodul zumindest eine Aktuatorvorrichtung aufweist, die zur Bereitstellung einer Verstellkraft zur Verstellung der Rückenlehne zumindest zwischen der aufrechten Sonderstellung und der aufrechten Sitzstellung aufweist, vorgesehen ist. Unter einer Aktuatorvorrichtung" soll vorzugsweise insbesondere eine Vorrichtung aus zumindest einem Aktuator verstanden werden, die zumindest dazu vorgesehen ist, in zumindest eine Betätigungsrichtung eine Verstellkraft bereitzustellen. Grundsätzlich ist es insbesondere denkbar, dass ein Aktuator als ein hydraulischer Aktor, als ein elektrischer/elektronischer Aktuator, oder als ein anderer, dem Fachmann als sinnvoll erscheinender Aktuator ausgebildet ist. Dadurch kann das Kinematikmodul zur Verstellung des Sitzes in die aufrechte Sonderstellung besonders einfach in bestehende Flugzeugsitzverstellungsvorrichtungen integriert werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen, soweit sie in den Anwendungsbereich der beigefügten Ansprüche fallen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, soweit sie in den Anwendungsbereich der beigefügten Ansprüche fallen.

Es zeigen:
- Fig. 1: eine schematische Darstellung eines Flugzeugsitzes mit einer Flugzeugsitzvorrichtung in einem ersten Ausführungsbeispiel, in einer normalen, aufrechten Sitzposition,
- Fig. 2: eine schematische Darstellung des Flugzeugsitzes in einer Komfortposition,
- Fig. 3: eine schematische Darstellung des Flugzugsitzes in einer aufrechten Sonderposition und eines dahinter angeordneten weiteren Flugzeugsitzes,
- Fig. 4: eine schematische Detailansicht eines Kinematikmoduls zur Verstellung des Flugzeugsitzes,
- Fig. 5: eine schematische Darstellung eines Flugzeugsitzes mit einer Flugzeugsitzvorrichtung in einem zweiten Ausführungsbeispiel, in einer normalen, aufrechten Sitzposition
- Fig. 6: eine schematische Darstellung des Flugzugsitzes in einer aufrechten Sonderposition,
- Fig. 7: eine schematische Darstellung eines Flugzeugsitzes mit einer Flugzeugsitzvorrichtung in einem dritten Ausführungsbeispiel, in einer normalen, aufrechten Sitzposition,
- Fig. 8: eine schematische Darstellung des Flugzugsitzes in einer aufrechten Sonderposition,
- Fig. 9: eine schematische Darstellung eines Flugzeugsitzes mit einer Flugzeugsitzvorrichtung in einem vierten Ausführungsbeispiel, in einer normalen, aufrechten Sitzposition,
- Fig. 10: eine schematische Darstellung einer Schaltbox für ein Kinematikmodul einer Flugzeugsitzvorrichtung in einem fünften Ausführungsbeispiel,
- Fig. 11: eine weitere schematische Darstellung der Schaltbox und
- Fig. 12: eine dritte schematische Darstellung der Schaltbox.

### Beschreibung der Ausführungsbeispiele

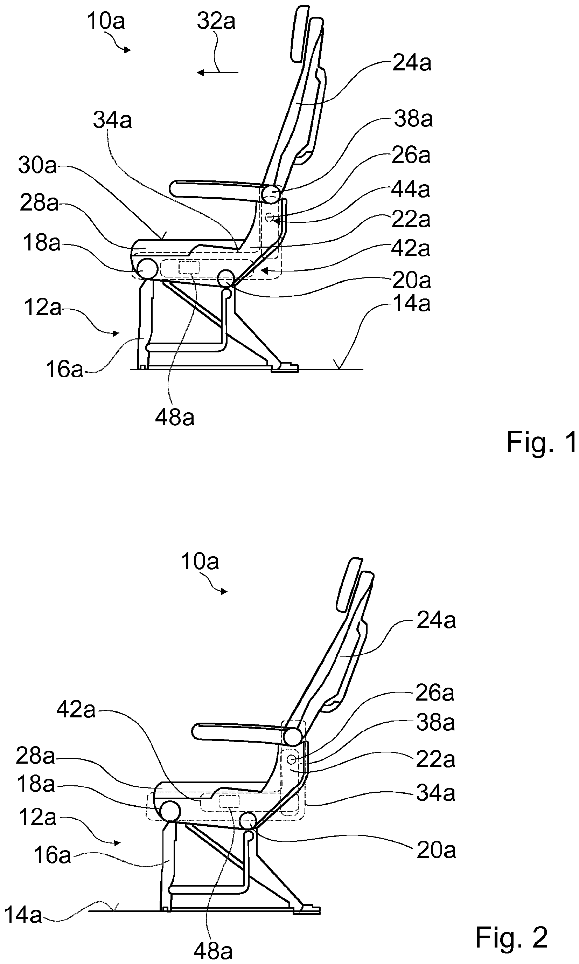

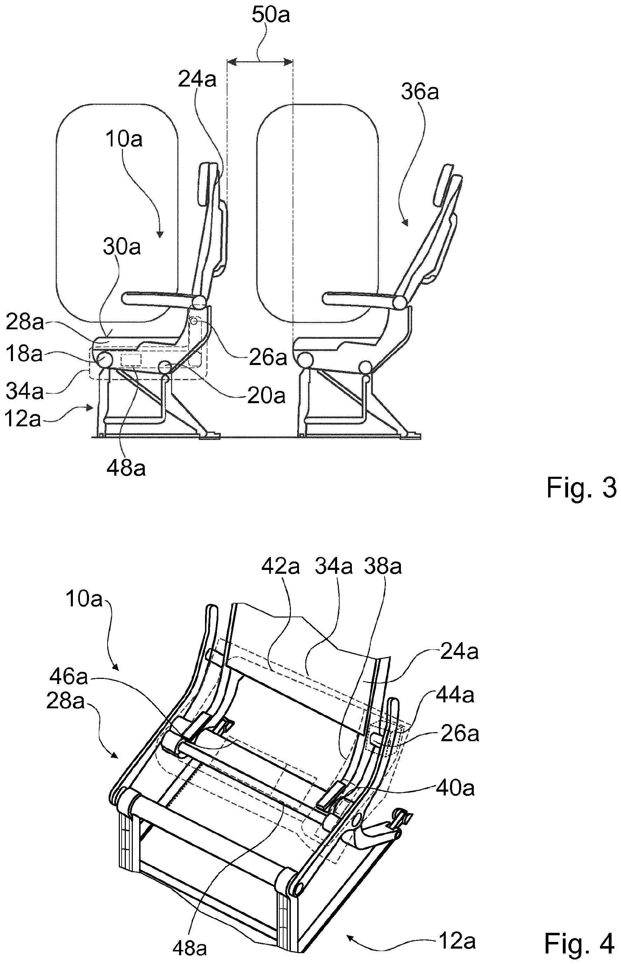

Die Figuren 1 bis 4 zeigen eine Flugzeugsitzvorrichtung in einem ersten Ausführungsbeispiel. Die Flugzeugsitzvorrichtung ist dabei Teil eines Flugzeugsitzes 10a. Der Flugzeugsitz 10a ist in einem montierten Zustand in einer Flugzeugkabine eines Flugzeugs aufgeständert. Der Flugzeugsitz 10a ist dazu vorgesehen in einem montierten Zustand fest auf einem Kabinenboden der Flugzeugkabine montiert zu werden. Die Flugzeugsitzvorrichtung weist eine Aufständereinheit 12a auf. Mittels der Aufständereinheit 12a ist der Flugzeugsitz 10a auf dem Kabinenboden der Flugzeugkabine aufständerbar. Der Kabinenboden bildet eine Aufständerebene 14a aus. Der Flugzeugsitz 10a ist vorzugsweise als ein Teil einer Sitzreihe ausgebildet, die mehr als einen Flugzeugsitz 10a, vorzugsweise zumindest zwei Flugzeugsitze 10a, umfasst. Die Aufständereinheit 12a ist dabei als eine gemeinsame Aufständereinheit der Flugzeugsitze 10a einer Flugzeugsitzreihe ausgebildet. Die Aufständereinheit 12a umfasst zwei Sitzfüße 16a. Die Sitzfüße 16a sind jeweils über nicht näher dargestellte Fittings mit Befestigungsschienen gekoppelt, die fest mit dem Kabinenboden verbunden sind. Die Fittings sind fest in den Befestigungsschienen arretierbar. Die Aufständereinheit 12a weist zwei Querträger 18a, 20a auf. Die Querträger 18a, 20a sind als Tragrohre ausgebildet. Ein vorderer Querträger 18a ist in einem vorderen Bereich des Flugzeugsitzes 10a angeordnet. Ein hinterer Querträger 20a ist in einem hinteren Bereich des Flugzeugsitzes 10a angeordnet. Die Querträger 18a, 20a verlaufen in einer Querrichtung des Flugzeugsitzes 10a. Die Querträger 18a, 20a erstrecken sich zumindest im Wesentlichen über eine gesamte Quererstreckung aller Flugzeugsitze 10a einer Sitzreihe. Die Aufständereinheit 12a des Flugzeugsitzes 10a weist zwei Sitzteiler 22a auf. Die Sitzteiler 22a sind jeweils seitlich eines Sitzbereichs des Flugzeugsitzes10a angeordnet. Die Sitzteiler 22a sind an den Querträgern 18a, 20a angeordnet. Die Sitzteiler 22a sind in Querrichtung beabstandet zueinander an den Querträgern 18a, 20a befestigt. Die Sitzteiler 22a sind positionsfest mit den Querträgern 18a, 20a verbunden. Die Sitzteiler 22a sind dazu vorgesehen, dass verschiedene Bauteile des entsprechenden Flugzeugsitzes 10a an ihm befestigt werden, wie im Folgenden zumindest teilweise näher beschrieben ist. Grundsätzlich ist es auch denkbar, dass die Aufständereinheit 12a keine oder anders ausgeführte Sitzteiler 22a aufweist und entsprechende Bauteile des Flugzeugsitzes 10a anders an die Aufständereinheit 12a angebunden sind. Die Flugzeugsitzvorrichtung umfasst eine Rückenlehne 24a. Die Rückenlehne 24a ist dabei dazu vorgesehen, dass eine Person, die auf dem Flugzeugsitz 10a sitzt, dessen Teil die Flugzeugsitzvorrichtung ist, ihren Rücken an der Rückenlehne 24a abstützen kann. Die Rückenlehne 24a weist einen Grundköper und eine daran befestigte Polsterung auf. Die Rückenlehne 24a ist dabei vorzugsweise von einem Rahmen mit einer Bespannung als Grundrahmen und einem entsprechend darauf befestigten Polster gebildet. Grundsätzlich ist es aber auch denkbar, dass die Rückenlehne 24a auf eine andere, dem Fachmann als sinnvoll erscheinende Weise ausgebildet ist. Die Rückenlehne 24a ist schwenkbar zu der Aufständereinheit 12a angeordnet. Die Rückenlehne 24a ist dabei an den Sitzteilern 22a jeweils über eine Rückenlehnenlagerstelle 26a schwenkbar angelenkt. Die Rückenlehne 24a umfasst dazu zwei seitlich angeordnete, nicht näher dargestellte Lagerbolzen, über die die Rückenlehne 24a jeweils mit einem Sitzteiler 22a schwenkbar verbunden ist. Die Flugzeugsitzvorrichtung umfasst einen Sitzboden 28a. Der Sitzboden 28a bildet eine Sitzfläche 30a des Flugzeugsitzes 10a aus. Der Sitzboden 28a weist einen Grundkörper und ein auf dem Grundkörper fest angebrachtes Polsterelement auf. Das Polsterelement bildet die Sitzfläche 30a des Flugzeugsitzes 10a aus. Der Sitzboden 28a ist an die Aufständereinheit 12a angebunden. Der Sitzboden 28a ist insbesondere an die Querträger 18a, 20a angebunden. Der Sitzboden 28a ist mit der Rückenlehne 24a gekoppelt. Der Sitzboden 28a ist direkt mit der Rückenlehne 24a gekoppelt. Die Rückenlehne 24a und der Sitzboden 28a sind gelenkig miteinander verbunden. Grundsätzlich wäre es auch denkbar, dass der Sitzboden 28a lediglich über die Aufständereinheit 12a mit der Rückenlehne 24a verbunden ist. Der Flugzeugsitz 10a bildet dabei eine Sitzrichtung 32a aus. Die Sitzrichtung 32a ist als die Richtung definiert, in der ein Passagier auf dem Flugzeugsitz 10a sitzt. Der Sitzrichtung 32a steht orthogonal auf einer Rückenlehnenfläche der Rückenlehne 24a und verläuft parallel zu der Aufständerebene14a in Richtung eines vorderen Endes des Sitzbodens 28a.

Die Flugzeugsitzvorrichtung umfasst ein Kinematikmodul 34a, das zur Verstellung des Flugzeugsitzes 10a in unterschiedliche Stellungen vorgesehen ist. Mittels des Kinematikmoduls 34a kann der Flugzeugsitz 10a durch einen Benutzer, insbesondere durch einen Passagier in unterschiedliche Stellungen verstellt werden. Der Flugzeugsitz 10a kann mittels des Kinematikmoduls 34a in eine normale, aufrechte Sitzstellung gestellt werden. In der normalen, aufrechten Sitzstellung ist der Flugzeugsitz 10a in einer TTL-Stellung, in der ein Passagier im Wesentlichen aufrecht auf dem Flugzeugsitz 10a sitzen kann.

Der Flugzeugsitz 10a kann mittels des Kinematikmoduls 34a in eine Komfortposition gestellt werden. In der Komfortstellung ist der Flugzeugsitz 10a in einer nach hinten geneigten Stellung indem einem Passagier eine gemütlichere, komfortablere Sitzposition ermöglicht wird. In der Komfortstellung ist der Flugzeugsitz 10a so weit nach hinten geneigt, dass ein größerer Teil einer Gewichtskraft eines auf dem Flugzeugsitz 10a sitzenden Passagiers über die Rückenlehne 24a abgestützt wird, als in der normalen Sitzstellu ng.

Der Flugzeugsitz 10a kann mittels des Kinematikmoduls 34a in eine weitere aufrechte Sonderstellung gestellt werden. In der weiteren aufrechten Sonderstellung ist der Flugzeugsitz 10a aufrechter ausgerichtet als in der aufrechten Sitzstellung. Die aufrechte Sonderstellung des Flugzeugsitzes 10a ist nicht als eine vorgesehene Sitzstellung ausgebildet. Die aufrechte Sonderstellung des Flugzeugsitzes 10a ist als eine Stellung des Flugzeugsitzes 10a ausgebildet, in der der Flugzeugsitz 10a in der Sitzrichtung 32a eine möglichst kleine Erstreckung aufweist. In der weiteren aufrechten Sonderstellung ist der Flugzeugsitz 10a dazu vorgesehen, mit seinen beweglichen Komponenten möglichst wenig in Richtung eines hinter dem Flugzeugsitz 10a angeordneten Flugzeugsitzes 36a zu ragen. In der Sonderstellung des Flugzeugsitzes 10a kann ein Livingspace des hinteren Flugzeugsitzes 36a im Gegensatz zu der aufrechten Sitzstellung des Flugzeugsitzes 10a vergrößert werden. Unter einem Livingspace ist dabei insbesondere ein, dem auf einem entsprechenden Flugzeugsitz 10a, 36a sitzenden zur Verfügung stehender Raum zu verstehen. In der aufrechten Sonderstellung kann ein Abstand 50a einer Rückseite der Rückenlehne 24a des Flugzeugsitzes 10a zu einer Vorderkante des hinteren Flugzeugsitzes 36a im Gegensatz zu der normalen aufrechten Sitzstellung vergrößert werden. Der Abstand 50a kann dabei in der Sonderstellung um zumindest 50 mm gegenüber der normalen Sitzstellung erhöht werden. Der Abstand 50a kann in der Sonderstellung vorteilhaft um zumindest 50 mm bis 150 mm gegenüber der normalen Sitzstellung erhöht werden. Dadurch kann einem Passagier auf dem hinteren Flugzeugsitz 10a ein größerer Raum, beispielsweise beim Ein- und Aussteigen, sowie auch ein breiterer Fluchtweg bereitgestellt werden, wenn der vordere Flugzeugsitz 10a in der aufrechten Sonderstellung angeordnet ist, insbesondere dann wenn der vordere Flugzeugsitz 10a unbesetzt ist.

Das Kinematikmodul 34a ist in der normalen aufrechten Sitzstellung des Flugzeugsitzes 10a dazu vorgesehen, die Rückenlehne 24a in einer normalen, im Wesentlichen aufrechten Sitzposition auszurichten. In der normalen Sitzposition ist die Rückenlehne 24a leicht nach hinten geneigt. In der normalen Sitzposition schließt die Rückenlehne 24a mit ihrer Rückseite einen Winkel von 80 Grad mit der Aufständerebene 14a ein. Das Kinematikmodul 34a ist in der Komfortstellung des Flugzeugsitzes 10a dazu vorgesehen, die Rückenlehne 24a in einer nach hinten geneigten Sitzposition auszurichten. In der Komfortposition ist die Rückenlehne 24a im Gegensatz zu ihrer normalen Sitzposition weiter nach hinten geneigt. In der Komfortposition schließt die Rückenlehne 24a mit ihrer Rückseite einen Winkel von 70 Grad mit der Aufständereinheit 12a ein.

Das Kinematikmodul 34a ist in der normalen aufrechten Sitzstellung des Flugzeugsitzes 10a dazu vorgesehen, den Sitzboden 28a in einer normalen Sitzposition auszurichten. In der normalen Sitzposition ist der Sitzboden 28a im Wesentlichen parallel zu der Aufständerebene 14a ausgerichtet. Der Sitzboden 28a ist in der normalen Sitzposition insbesondere leicht nach hinten geneigt. Der Sitzboden 28a weist in der normalen Sitzposition einen Winkel von 3 Grad zu der Aufständerebene 14a auf. Das Kinematikmodul 34a ist in der Komfortstellung des Flugzeugsitzes 10a dazu vorgesehenen, den Sitzboden 28a in einer geneigten Sitzposition auszurichten. In der Komfortposition ist der Sitzboden 28a im Gegensatz zu seiner normalen Sitzposition weiter nach hinten geneigt. Der Sitzboden 28a ist in der Komfortposition insbesondere weiter nach vorne geneigt als in der normalen Sitzposition. Der Sitzboden 28a weist in der Komfortposition einen Winkel von 5 - 15 Grad zu der Aufständerebene 14a auf. Dabei ist der Sitzboden 28 vorteilhaft nach vorne geneigt um eine möglichst ergonomische und gemütliche Sitzposition zu erreichen. Grundsätzlich wäre es auch denkbar, dass der Sitzboden 28a in der Komfortposition eine gleiche Neigung aufweist wie in der normalen Sitzposition.

Das Kinematikmodul 34a weist eine Reclineeinheit 38a auf, die dazu vorgesehen ist, die Rückenlehne 24a und den Sitzboden 28a zwischen der normalen aufrechten Sitzposition in die Komfortposition zu verstellen. Die Reclineeinheit 38a ist als eine Mechanik ausgebildet, mittles der die Rückenlehne 24a zwischen der normalen aufrechten Sitzposition und der Komfortposition verstellbar ist. Die Reclineeinheit 38a ist dazu vorgesehen, die Rückenlehne 24a zwischen ihrer normalen aufrechten Sitzposition und der Komfortposition zu verschwenkten. Die Reclineeinheit 38a ist dazu vorgesehen, dass die Rückenlehne 24a stufenlos zwischen der Sitzposition und der Komfortposition arretierbar ist. Die Reclineeinheit 38a ist dazu vorgesehen, die Rückenlehne 24a um die Rückenlehnenlagerstelle 26a relativ zu der Aufständereinheit 12a zwischen der normalen, aufrechten Sitzposition und der Komfortposition zu verschwenken. Die Reclineeinheit 38a umfasst eine betätigbare Gasdruckfeder 40a zur Verriegelung der Rückenlehne 24a in ihren unterschiedlichen Positionen. Die Gasdruckfeder 40a ist mit einem ersten Ende an der Aufständereinheit 12a angebunden. Mit einem zweiten Ende ist die Gasdruckfeder 40a indirekt an der Rückenlehne 24a angebunden. Die Gasdruckfeder 40a ist beispielsweise über ein Torsionsrohr oder eine andere Mechanik an die Rückenlehne 24a angebunden. Die Gasdruckfeder 40a ist insbesondere an einer Anbindungsstelle an der Rückenlehne 24a angebunden, die auf einer der Aufständerebene 14a zugewandten Seite der Rückenlehnenlagerstelle 26a angeordnet ist. Die betätigbare Gasdruckfeder 40a ist in ihrer effektiven Länge veränderbar. Dazu weist die Gasdruckfeder 40a einen in einem Gehäuse axial verschiebbar gelagerten Stößel auf. In einem unbetätigten Zustand ist der Stößel in dem Gehäuse gesperrt. Die Gasdruckfeder 40a weist in dem unbetätigten Zustand eine konstante effektive Länge auf. In einem betätigten Zustand ist der Stößel der Gasdruckfeder 40a teilweise freigegeben und eine effektive Länge der Gasdruckfeder 40a kann variiert werden. Durch Variation der effektiven Lände der Gasdruckfeder 40a kann eine Winkelstellung der Rückenlehne 24a eingestellt werden. In einem unbetätigten Zustand der Gasdruckfeder 40a ist die Rückenlehne 24a in einer entsprechenden Winkelstellung zwischen der Komfortposition und der aufrechten Sitzposition arretierbar.

In einem betätigten Zustand der Gasdruckfeder 40a kann die Rückenlehne 24a durch entsprechende Kraftausübung auf die Rückenlehne 24a zwischen der aufrechten Sitzposition und der normalen, aufrechten Sitzposition verstellt werden. Die betätigbare Gasdruckfeder 40a ist mittels eines Betätigungselements zwischen dem betätigten Zustand und dem unbetätigten Zustand verstellbar. Grundsätzlich ist es auch denkbar, dass die Reclineeinheit 38a anstatt der betätigbaren Gasdruckfeder 40a ein anderes Verriegelungselement, wie beispielsweise eine Schlingfeder, einen elektrischen Aktuator oder ein anderes, dem Fachmann als sinnvoll erscheinendes Federelement aufweist.

Das Kinematikmodul 34a ist dazu vorgesehen, die Rückenlehne 24a in wenigstens einem Betriebszustand in eine weitere, von der aufrechten Sitzposition unterschiedliche aufrechte Sonderposition zu verstellen. Das Kinematikmodul 34a ist in der Sonderstellung des Flugzeugsitzes 10a dazu vorgesehen, die Rückenlehne 24a in die von der aufrechten Sitzposition unterschiedliche aufrechte Sonderposition zu verstellen. In der aufrechten Sonderposition ist die Rückenlehne 24a steiler ausgerichtet als in der aufrechten Sitzposition. In der aufrechten Sonderposition ist die Rückenlehne 24a im Wesentlichen orthogonal zu der Aufständerebene 14a ausgerichtet. Das Kinematikmodul 34a ist dazu vorgesehen, die Rückenlehne 24a in der aufrechten Sonderposition im Wesentlichen senkrecht zu einer Aufständerebene 14a auszurichten. In der aufrechten Sonderposition schließt die Rückenlehne 24a mit ihrer Rückseite vorzugsweise einen Winkel von 90 Grad mit der Aufständerebene 14a ein.

Das Kinematikmodul 34a ist dazu vorgesehen, den Flugzeugsitz 10a in einem unbenutzten Zustand selbsttätig in die aufrechte Sonderstellung zu verstellen. Das Kinematikmodul 34a ist dazu vorgesehen, die Rückenlehne 24a in einem unbenutzten Zustand selbsttätig in die aufrechte Sonderposition zu verstellen. Ein unbenutzter Zustand des Flugzeugsitzes 10a ist insbesondere als ein Zustand ausgebildet, in dem keine Person auf dem Flugzeugsitz 10a sitzt. Insbesondere ist der unbenutzte Zustand des Flugzeugsitzes 10a als ein Zustand ausgebildet in dem keine Kraft, insbesondere keine Gewichtskraft auf den Flugzeugsitz 10a, insbesondere den Sitzboden 28a und die Rückenlehne 24a wirkt. Vorzugsweise ist die Kraft von einer Gewichtskraft eines auf dem Flugzeugsitz 10a sitzenden Passagiers gebildet, jedoch wäre grundsätzlich auch eine Gewichtskraft eines Objektes, das auf dem Flugzeugsitz 10a angeordnet ist, denkbar. Wirkt keine entsprechende Kraft, insbesondere keine entsprechende Gewichtskraft eines Passagiers auf den Flugzeugsitz 10a ist der Flugzeugsitz 10a in einem unbenutzten Zustand und das Kinematikmodul 34a verstellt die Rückenlehne 24a selbsttätig in die aufrechte Sonderposition. Ist der Flugzeugsitz 10a unbenutzt, ist der Flugzeugsitz 10a zumindest nach einer definierten Übergangszeit immer in seiner aufrechten Sonderstellung konfiguriert.

In einem benutzten Zustand des Flugzeugsitzes 10a ist das Kinematikmodul 34a dazu vorgesehen, den Flugzeugsitz 10a zunächst in die normale aufrechte Sitzstellung zu verstellen. Ein benutzter Zustand ist insbesondere als ein Zustand ausgebildet, in dem eine Kraft, vorzugsweise insbesondere eine Gewichtskraft eines auf dem Flugzeugsitz 10a sitzenden Passagiers, auf den Flugzeugsitz 10a insbesondere auf den Sitzboden 28a und/oder die Rückenlehne 24a wirkt. Ein benutzter Zustand ist insbesondere als ein Zustand ausgebildet, in dem eine Person auf dem Flugzeugsitz 10a sitzt. Das Kinematikmodul 34a ist insbesondere dazu vorgesehen, den Flugzeugsitz 10a, wenn er sich in seiner aufrechten Sonderstellung befindet, bei oder unmittelbar nach einem Hinsetzten eines Passagiers auf den Flugzeugsitz 10a automatisch in die aufrechte Sitzstellung zu verstellen. Das Kinematikmodul 34a verstellt die Rückenlehne 24a bei einem Hinsetzten eines Passagiers automatisch in die normale, im Wesentlichen aufrechte Sitzposition. Insbesondere verstellt das Kinematikmodul 34a die Rückenlehne 24a beim Hinsetzten eines Passagiers automatisch von der aufrechten Sonderposition aus in die normale Sitzposition.

Das Kinematikmodul 34a weist einen Betätigungsmechanismus 42a auf, der zur Verstellung der Rückenlehne 24a zwischen der normalen Sitzposition und der aufrechten Sonderposition vorgesehen ist. Der Betätigungsmechanismus 42a und die Reclineeinheit 38a des Kinematikmoduls 34a sind zumindest teilweise einstückig miteinander ausgebildet. Mittels des Betätigungsmechanismus 42a kann die Rückenlehne 24a von ihrer aufrechten Sonderposition in ihre normale, aufrechte Sitzposition verstellt werden. Dabei wird die Rückenlehne 24a insbesondere bei einer Betätigung des Betätigungsmechanismus 42a von der aufrechten Sonderposition in die normale, aufrechte Sitzposition verstellt. Der Betätigungsmechanismus 42a wird insbesondere in einem benutzten Zustand des Flugzeugsitzes 10a, insbesondere durch die Gewichtskraft eines auf dem Flugzeugsitz 10a sitzenden Passagiers betätigt. Der Betätigungsmechanismus 42a ist als ein selbsttätiger Mechanismus ausgebildet, der zumindest durch eine auf den Sitzboden 28a wirkende Sitzkraft und/oder durch eine auf die Rückenlehne 24a wirkende Kraft betätigt wird. Eine Verstellkraft des Betätigungsmechanismus 42a zur Verstellung der Rückenlehne 24a von der aufrechten Sonderposition in die normale aufrechte Sitzposition wird von der Gewichtskraft des auf dem Flugzeugsitz 10a sitzenden Passagiers ausgebildet. Grundsätzlich wäre es denkbar, dass der Betätigungsmechanismus 42a eine Aktuator, beispielsweise eine Art Federelement aufweist, die zumindest einen Teil der Verstellkraft bereitstellt.

Der Betätigungsmechanismus 42a ist ebenfalls dazu vorgesehen, die Rückenlehne 24a automatisch in die weitere aufrechte Sonderposition zurück zu verstellen. Der Betätigungsmechanismus 42a ist insbesondere dazu vorgesehen, die Rückenlehne 24a in einem unbenutzten Zustand des Flugzeugsitzes 10a automatisch in die weitere, aufrechte Sonderposition zu verstellen. Der Betätigungsmechanismus 42a ist insbesondere dazu vorgesehen, die Rückenlehne 24a aus der normalen aufrechten Sitzposition, als auch aus der Komfortposition in die aufrechte Sonderstellung zu verstellen. Grundsätzlich wäre es auch denkbar, dass der Betätigungsmechanismus 42a lediglich dazu vorgesehen ist, die Rückenlehne 24a aus der normalen aufrechten Sitzposition in die weitere aufrechte Sonderposition zu verstellen. Ist die Rückenlehne 24a in der Komfortposition, der aufrechten Sitzposition, oder in einer Zwischenposition zwischen diesen beiden Positionen, wird die Rückenlehne 24a bei einem Wegfall einer auf den Flugzeugsitz 10a wirkenden Sitzkraft automatisch in die aufrechte Sonderstellung verstellt. Der Betätigungsmechanismus 42a weist ein Federelement auf, das zur Bereitstellung einer Verstellkraft zur Rückstellung der Rückenlehne 24a in die aufrechte Sonderstellung vorgesehen ist. Das Federelement ist als eine Gasdruckfeder ausgebildet. Grundsätzlich wäre es auch denkbar, dass das Federelement als ein anderes Federelement, beispielsweise als eine Zug- oder Druckfeder mit einer integrierten Sperre ausgebildet ist. Das Federelement des Betätigungsmechanismus 42a verstellt die Rückenlehne 24a aus der aufrechten Sitzstellung oder der Komfortstellung in die aufrechte Sonderstellung wenn der Flugzeugsitz 10a von einem benutzten Zustand in einen unbenutzten Zustand übergeht.

Der Betätigungsmechanismus 42a weist eine Sperrvorrichtung 44a auf. Die Sperrvorrichtung 44a ist dazu vorgesehen, in einem gesperrten Zustand eine Rotation der Rückenlehne 24a nach vorne auf die normale Sitzstellung zu begrenzen. In dem gesperrten Zustand der Sperrvorrichtung 44a kann die Rückenlehne 24a nur bis in die normale Sitzstellung in eine aufrechte Sitzposition gebracht werden. In einem entsperrten Zustand gibt die Sperrvorrichtung 44a eine Verschwenkung der Rückenlehne 24a um die Rückenlehnenlagerstelle 26a von der normalen aufrechten Sitzposition in die aufrechte Sonderposition frei. Die Sperrvorrichtung 44a könnte dabei insbesondere vorteilhaft ein Formgedächtniselement aufweisen, das für die Sperrung der Rückenlehne 24a vorgesehen ist.

Der Betätigungsmechanismus 42a weist ein Betätigungselement 46a auf, das dazu vorgesehen ist, die Sperrvorrichtung 44a zu betätigen. Das Betätigungselement 46a ist dazu vorgesehen, die Sperrvorrichtung 44a zwischen einem gesperrten Zustand und einem entsperrten Zustand zu verstellen. In einem betätigten Zustand des Betätigungselements 46a ist die Sperrvorrichtung 44a in den gesperrten Zustand geschaltet. In einem unbetätigten Zustand des Betätigungselements 46a ist die Sperrvorrichtung 44a in den entsperrten Zustand geschaltet. Das Betätigungselement 46a ist als ein Drucksensorelement in dem Sitzboden 28a ausgebildet. Durch eine Druckkraft, insbesondere durch eine Gewichtskraft eines auf dem Sitzboden 28a sitzenden Passagiers wird das Betätigungselement 46a betätigt. Sitzt ein Passagier auf dem Sitzboden 28a wird das Betätigungselement 46a betätigt, also in einen betätigten Zustand versetzt. Sitzt kein Passagier auf dem Sitzboden 28a, bzw. wirkt keine entsprechende Gewichtskraft auf den Sitzboden 28a, ist das Betätigungselement 46a unbetätigt, ist also in seinem unbetätigten Zustand. Das Betätigungselement 46a ist dabei als eine Druckplatte ausgebildet, die durch eine entsprechende Gewichtskraft eines auf dem Sitzboden 28a sitzenden Passagiers ausgelenkt werden kann und dadurch die Sperrvorrichtung 44a betätigt. Grundsätzlich ist es auch denkbar, dass das Betätigungselement 46a als ein Sensorelement, insbesondere ein elektronisches Sensorelement ausgebildet ist, das eine auf den Sitzboden 28a wirkende Gewichtskraft sensieren kann und ein entsprechendes Sensorsignal ausgibt. Die Sperrvorrichtung 44a würde dabei entsprechend dem Sensorsignal elektrisch oder elektronisch entriegelt.

Der Betätigungsmechanismus 42a weist eine Verzögerungseinheit 48a auf. Die Verzögerungseinheit 48a ist dazu vorgesehen eine Rückstellung der Rückenlehne 24a von der normalen Sitzposition oder der Komfortposition zurück in die aufrechte Sonderposition zu verzögern nachdem eine Gewichtskraft eines Passagiers von dem Sitzboden 28a entfällt. Dadurch kann verhindert werden, dass der Flugzeugsitz 10a jedes Mal, wenn der Passagier kurz aufsteht, in die aufrechte Sonderstellung verstellt wird. Die Verzögerungseinheit 48a verriegelt den Betätigungsmechanismus 42a für zumindest zwei Sekunden nach Wegfall der Sitzkraft. Die Verzögerungseinheit 48a verriegelt den Flugzeugsitz 10a in seiner Sitzstellung oder Komfortstellung für zumindest 2 Sekunden nachdem ein Passagier von dem Flugzeugsitz 10a aufgestanden ist, der Flugzeugsitz 10a also eigentlich in einem unbenutzten Zustand ist. Grundsätzlich ist es auch denkbar, dass die Verzögerungseinheit 48a den Flugzeugsitz 10a für eine längere Zeitspanne, beispielsweise 5 oder 10 Sekunden Verriegeln kann.

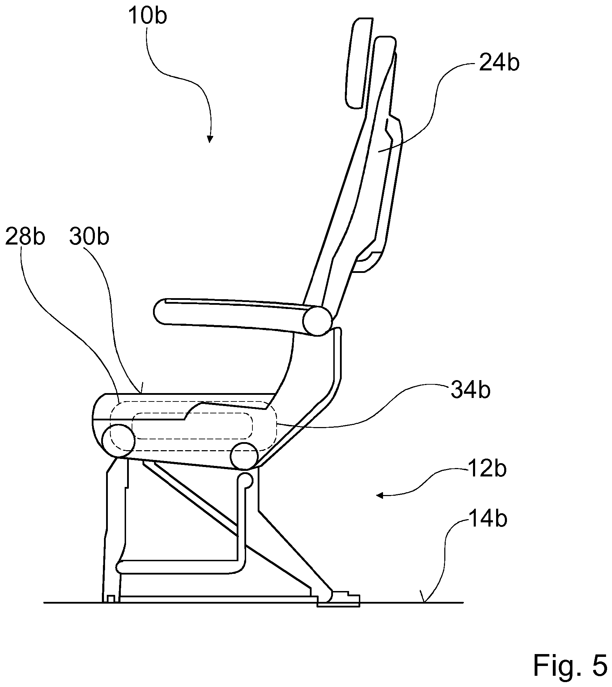

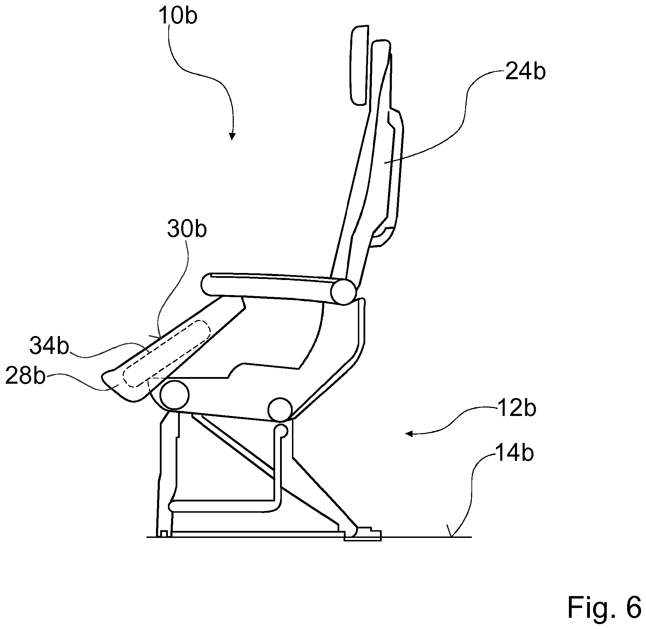

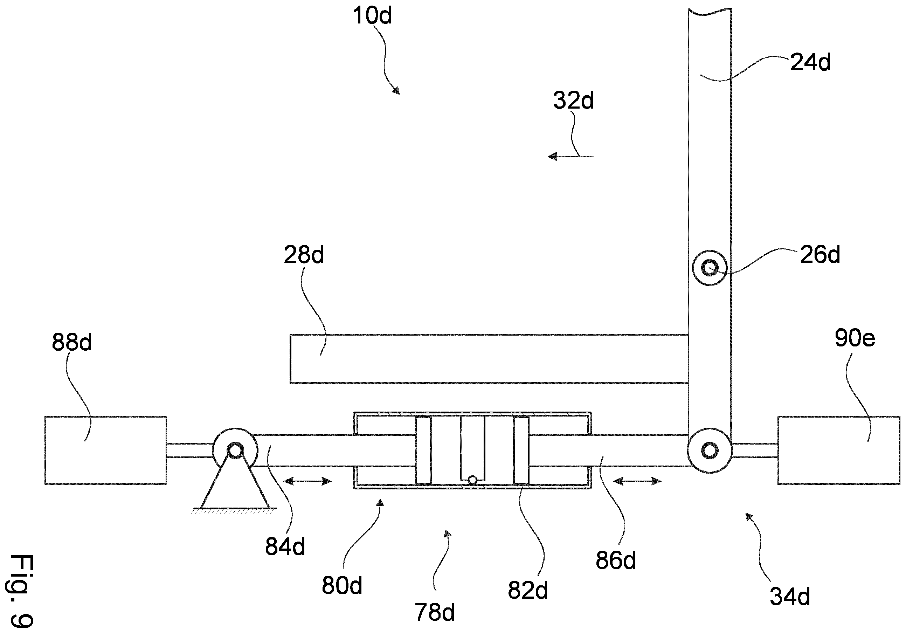

In den Fig. 5 bis 12 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Fig. 5 und 6 ist der Buchstabe a durch die Buchstaben b ersetzt.

In den Figuren 5 und 6 ist ein zweites Ausführungsbeispiel einer Flugzeugsitzvorrichtung gezeigt. Die Flugzeugsitzvorrichtung ist dabei Teil eines Flugzeugsitzes 10b. Der Flugzeugsitz 10b ist in einem montierten Zustand in einer Flugzeugkabine eines Flugzeugs aufgeständert. Die Flugzeugsitzvorrichtung weist eine Aufständereinheit 12b auf. Mittels der Aufständereinheit 12b ist der Flugzeugsitz 10b auf dem Kabinenboden der Flugzeugkabine aufständerbar. Der Kabinenboden bildet eine Aufständerebene 14b aus. Die Aufständereinheit 12b des Flugzeugsitzes 10b weist zwei Sitzteiler 22b auf. Die Sitzteiler 22b sind jeweils seitlich eines Sitzbereichs des Flugzeugsitzes angeordnet. Die Sitzteiler 22b sind an den Querträgern angeordnet. Die Flugzeugsitzvorrichtung umfasst eine Rückenlehne 24b. Die Rückenlehne 24b ist dabei dazu vorgesehen, dass eine Person, die auf dem Flugzeugsitz 10b sitzt, dessen Teil die Flugzeugsitzvorrichtung ist, ihren Rücken an der Rückenlehne 24b abstützen kann. Die Rückenlehne 24b ist schwenkbar zu der Aufständereinheit angeordnet. Die Rückenlehne 24b ist dabei an den Sitzteilern jeweils über eine Rückenlehnenlagerstelle 26b schwenkbar angelenkt. Die Flugzeugsitzvorrichtung umfasst einen Sitzboden 28b. Der Sitzboden 28b bildet eine Sitzfläche 30b des Flugzeugsitzes aus. Der Sitzboden 28b ist mit der Rückenlehne 12ab gekoppelt. Der Sitzboden 28b ist direkt mit der Rückenlehne 24b gekoppelt. Die Rückenlehne 24b und der Sitzboden 28b sind gelenkig miteinander verbunden.

Die Flugzeugsitzvorrichtung umfasst ein Kinematikmodul 34b, das zur Verstellung des Flugzeugsitzes 10b in unterschiedliche Stellungen vorgesehen ist. Mittels des Kinematikmoduls 34b kann der Flugzeugsitz 10b durch einen Benutzer, insbesondere durch einen Passagier in unterschiedliche Stellungen verstellt werden. Der Flugzeugsitz 10b kann mittels des Kinematikmoduls 34b in eine normale, aufrechte Sitzstellung gestellt werden. In der normalen, aufrechten Sitzstellung ist der Flugzeugsitz 10b in einer TTL-Stellung, in der ein Passagier im Wesentlichen aufrecht in dem Flugzeugsitz 10b sitzen kann.

Der Flugzeugsitz 10b kann mittels des Kinematikmoduls 34b in eine weitere aufrechte Sonderstellung gestellt werden. In der weiteren aufrechten Sonderstellung ist der Flugzeugsitz 10b aufrechter ausgerichtet als in der aufrechten Sitzstellung. Die aufrechte Sonderstellung des Flugzeugsitzes 10b ist nicht als eine vorgesehene Sitzstellung ausgebildet. Die aufrechte Sonderstellung des Flugzeugsitzes 10b ist als eine Stellung des Flugzeugsitzes 10b ausgebildet in der der Flugzeugsitz 10b in der Sitzrichtung 32b eine möglichst kleine Erstreckung aufweist. Im Unterschied zu dem ersten Ausführungsbeispiel ist die aufrechte Sonderstellung des Flugzeugsitzes 10b als eine Stellung ausgebildet in der ein Passagier besonders sich besonders einfach auf den Flugzeugsitz 10b sitzen kann. In der aufrechten Sonderstellung ist die Sitzfläche 30b des Sitzbodens 28b gegenüber einer normalen aufrechten Sitzposition erhöht. Das Kinematikmodul 34b ist dazu vorgesehen, den Sitzboden 28b bei einer Verstellung aus der normalen aufrechten Sitzposition in die aufrechte Sonderposition in seiner Höhe relativ zu einer Aufständerebene 14b zu verstellen. Das Kinematikmodul 34b ist dazu vorgesehen, den Sitzboden 28b bei einer Verstellung aus der normalen aufrechten Sitzposition in die aufrechte Sonderposition zu verschwenken und einen Winkel des Sitzbodens 28b relativ zu der Aufständerebene 14b zu verstellen. Der Sitzboden 28b ist in seiner aufrechten Sonderposition nach vorne verschwenkt. Der Sitzboden 28b ist um 10 Grad nach vorne geschwenkt. Ein vorderes Ende des Sitzbodens 28b ist dabei im Vergleich zu der aufrechten Sitzposition nach unten verstellt. Ein hinteres Ende des Sitzbodens 28b ist dabei im Vergleich zu der aufrechten Sitzposition nach oben verstellt. Dadurch kann der Flugzeugsitz 10b in der aufrechten Sonderstellung besonders vorteilhaft zum Einstieg, insbesondere für ältere Menschen bereitgestellt werden. Eine Verstellung der Rückenlehne 24b erfolgt dabei Äquivalent zu dem ersten Ausführungsbeispiel. Grundsätzlich wäre es allerdings auch denkbar, dass das Kinematikmodul 34b lediglich zur Verstellung des Sitzbodens 28b in eine Sonderstellung vorgesehen ist und die Rückenlehne 24b nicht in eine aufrechte Sonderstellung verstellbar ist.

Grundsätzlich ist es ebenso denkbar, dass das Kinematikmodul 34b dazu vorgesehen ist, sowohl den Sitzboden 28b entsprechend der vorhergehenden Beschreibung zwischen der aufrechten Sitzposition und der aufrechten Sonderposition, als auch die Rückenlehne 24b entsprechend der Beschreibung aus dem ersten Ausführungsbeispiel zwischen der aufrechten Sitzposition und der aufrechten Sonderposition zu verstellen, wenn der Flugzeugsitz 10b entsprechend zwischen der aufrechten Sitzstellung und seiner aufrechten Sonderstellung verstellt wird.

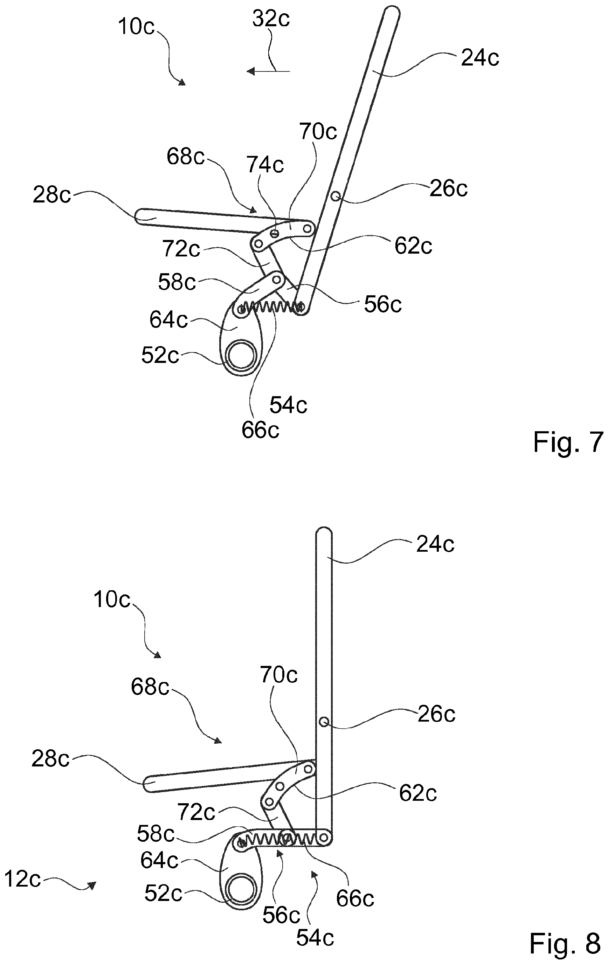

In den Figuren 7 und 8 ist ein drittes Ausführungsbeispiel einer erfindungsgemäßen Flugzeugsitzvorrichtung gezeigt. Die Flugzeugsitzvorrichtung ist dabei Teil eines Flugzeugsitzes 10c. Der Flugzeugsitz 10c ist in einem montierten Zustand in einer Flugzeugkabine eines Flugzeugs aufgeständert. Die Flugzeugsitzvorrichtung weist eine Aufständereinheit 12c auf. Mittels der Aufständereinheit 12c ist der Flugzeugsitz 10c auf dem Kabinenboden der Flugzeugkabine aufständerbar. Der Kabinenboden bildet eine Aufständerebene 14c aus. Die Aufständereinheit 12c des Flugzeugsitzes 10c weist zwei nicht näher dargestellte Sitzteiler auf. Die Sitzteiler sind an nicht näher dargestellten Querträgern der Aufständereinheit 12c angeordnet. Die Flugzeugsitzvorrichtung umfasst eine Rückenlehne 24c. Die Rückenlehne 24c ist dabei dazu vorgesehen, dass eine Person, die auf dem Flugzeugsitz 10c sitzt, dessen Teil die Flugzeugsitzvorrichtung ist, ihren Rücken an der Rückenlehne 24c abstützen kann. Die Rückenlehne 24c ist schwenkbar zu der Aufständereinheit 12c angeordnet. Die Rückenlehne 24c ist dabei an den Sitzteilern jeweils über eine Rückenlehnenlagerstelle 26c schwenkbar angelenkt. Die Flugzeugsitzvorrichtung umfasst einen Sitzboden 28c. Der Sitzboden 28c bildet eine Sitzfläche 30c des Flugzeugsitzes 10caus. Der Sitzboden 28c ist mit der Rückenlehne 24c gekoppelt. Der Sitzboden 28c ist direkt mit der Rückenlehne 24c gekoppelt. Die Rückenlehne 24c und der Sitzboden 28c sind gelenkig miteinander verbunden.

Die Flugzeugsitzvorrichtung umfasst weiter ein Sitzbauteil 52c. Das Sitzbauteil 52c ist als eine Querversteifungseinheit ausgebildet, die dazu vorgesehen ist, die Rückenlehne 24c in der Querversteifungseinheitenquerrichtung zu versteifen. Zudem ist das als Querversteifungseinheit ausgebildete Sitzbauteil 52c dazu vorgesehen, die eine Seite des Flugzeugsitzes 10c, dessen Teil die Flugzeugsitzvorrichtung ist, mit der weiteren Seite des Flugzeugsitzes 10c zu verbinden. Das als Querversteifungseinheit ausgebildete Sitzbauteil 52c erstreckt sich dabei zwischen Sitzteilern des Flugzeugsitzes 10c. Das als Querversteifungseinheit ausgebildete Sitzbauteil 52c ist drehbar in Sitzteilern gelagert. Das als Querversteifungseinheit ausgebildete Sitzbauteil 52c ist dazu vorgesehen, bei der Bewegung der Rückenlehne 24c gedreht zu werden. Das als Querversteifungseinheit ausgebildete Sitzbauteil 52c ist als ein Torsionselement ausgebildet. Im vorliegenden Ausführungsbeispiel ist das als Querversteifungseinheit ausgebildete Sitzbauteil 52c als ein Torsionsrohr ausgebildet. Der Flugzeugsitz 10c ist vorzugsweise im Wesentlichen gleich ausgebildet, wie die Flugzeugsitze der vorhergehenden Ausführungsbeispiele, insbesondere weist der Flugzeugsitz 10c die gleichen Grundkomponenten auf.

Die Flugzeugsitzvorrichtung umfasst ein Kinematikmodul 34c, das zur Verstellung des Flugzeugsitzes 10c in unterschiedliche Stellungen vorgesehen ist. Mittels des Kinematikmoduls 34c kann der Flugzeugsitz 10c durch einen Benutzer, insbesondere durch einen Passagier, in unterschiedliche Stellungen verstellt werden. Der Flugzeugsitz 10c kann mittels des Kinematikmoduls 34c in eine normale, aufrechte Sitzstellung gestellt werden. In der normalen, aufrechten Sitzstellung ist der Flugzeugsitz 10c in einer TTL-Stellung, in der ein Passagier im Wesentlichen aufrecht in dem Flugzeugsitz 10c sitzen kann. Der Flugzeugsitz 10c kann mittels des Kinematikmoduls 34c in eine weitere aufrechte Sonderstellung gestellt werden. In der weiteren aufrechten Sonderstellung ist der Flugzeugsitz 10c aufrechter ausgerichtet als in der aufrechten Sitzstellung. Die aufrechte Sonderstellung des Flugzeugsitzes 10c ist nicht als eine vorgesehene Sitzstellung ausgebildet. Die aufrechte Sonderstellung des Flugzeugsitzes 10c ist als eine Stellung des Flugzeugsitzes 10c ausgebildet, in der der Flugzeugsitz 10c in der Sitzrichtung 32c eine möglichst kleine Erstreckung aufweist.

Das Kinematikmodul 34c umfasst eine Rückenlehnenaufschlagssicherungsvorrichtung 54c. Die Rückenlehnenaufschlagssicherungsvorrichtung 54c ist zumindest in einem Normalbetriebszustand dazu vorgesehen, die Rückenlehne 24c und das Sitzbauteil 52c in einer Verriegelstellung starr zu verbinden. In dem Normalbetriebszustand, der einen normalen und ordnungsgemäßen Gebrauch des Flugzeugsitzes 10c abbildet, können Kräfte über die Rückenlehnenaufschlagssicherungsvorrichtung 54c von der Rückenlehne 24c in das Sitzbauteil 52c übertragen werden. In dem Normalbetriebszustand, in dem die Rückenlehnenaufschlagssicherungsvorrichtung 54c die Rückenlehne 24c und das Sitzbauteil 52c in der Verriegelstellung starr verbindet, können Kräfte nach vorne, also in Flugrichtung und entgegen der Flugrichtung, übertragen werden.

Die Rückenlehnenaufschlagssicherungsvorrichtung 54c ist dazu vorgesehen, die Rückenlehne 24c in zumindest einem Betriebszustand von dem Sitzbauteil 52c teilweise zu entkoppeln. Durch die teilweise Entkopplung der Rückenlehne 24c von dem Sitzbauteil 52c können in einem Crashfall die Rückenlehne 24c und das Sitzbauteil 52c eine Relativbewegung zueinander ausüben, um so eine Verletzungsgefahr für einen hinter dem Flugzeugsitz 10c sitzenden Passagier zu reduzieren.

Insbesondere in einem Crashfall mit einer Verzögerung entgegen der Flugrichtung entkoppelt die Rückenlehnenaufschlagssicherungsvorrichtung 54c die Rückenlehne 24c von dem Sitzbauteil 52c. Die Rückenlehnenaufschlagssicherungsvorrichtung 54c reduziert in einem Crashfall die Aufschlagskräfte, die auf die Rückenlehne 24c einwirken, zumindest teilweise, wodurch auch die Kraft auf einen Passagier, der die Kraft auf die Rückenlehne 24c ausübt, reduziert wird. Eine Verringerung der Aufschlagskräfte wird zumindest dadurch erreicht, dass die Rückenlehne 24c durch die zeitweise Entkopplung mit einem oberen Ende nach vorne in Flugrichtung verschwenkt wird und dadurch zumindest teilweise aus einer Bewegungsbahn eines Passagiers herausbewegt wird und zur normalen Sitzstellung nach vorne geneigt ist, wodurch ein Auftreffwinkel und ein Auftreffbereich des Passagiers verändert werden. Durch eine Neigung der Rückenlehne 24c aus der aufrechten Sitzstellung heraus nach vorne trifft ein hinter dem Flugzeugsitz 10c sitzender Passagier nicht auf der im Wesentlichen senkrecht stehenden Rückenlehne 24c auf, sondern auf einer nach vorne geneigten Rückenlehne 24c.

Das Kinematikmodul 34c weist eine erste Hebeleinheit 56c auf. Die erstes Hebeleinheit 56c ist von zwei zueinander beweglich ausgebildeten Lagerarmen 58c, 60c ausgebildet.

Die beiden Lagerarme 58c, 60c sind über eine Lagerstelle 62c verschwenkbar miteinander verbunden. Der erste Lagerarm 58c ist mit einem ersten Ende schwenkbar mit dem Sitzbauteil 52c gekoppelt. Der erste Lagerarm 58c ist insbesondere durch ein Exzenterelement 64c mit dem als Querversteifungseinheit ausgebildeten Sitzbauteil 52c verbunden. Der erste Lagerarm 58c ist gelenkig mit dem Exzenterelement 64c verbunden. Der zweite Lagerarm 60c ist gelenkig mit einem unteren Ende der Rückenlehne 24c verbunden. Der zweite Lagerarm 60c ist mit seinem ersten Ende an die Rückenlehne 24c angebunden. Das Kinematikmodul 34c umfasst ein Federelement 66c. Das Federelement 66c ist als ein Druckfederelement ausgebildet. Das Federelement 66c ist zwischen den beiden Lagerarmen 58c, 60b angeordnet. Das Federelement 66c ist mit einem ersten Ende an dem ersten Ende des ersten Lagerarms 58c angebunden und mit einem zweiten Ende an dem ersten Ende des zweiten Lagerarms 60c. Das Federelement 66c ist dazu vorgesehen, die voneinander abgewandten ersten Enden der Lagerarme 58c, 60c voneinander weg zu drücken. Das Federelement 66c ist insbesondere dazu vorgesehen, die Lagerarme 58c, 60c in eine Stellung zu drücken in der sie koaxial zueinander verlaufen und so ein maximaler Abstand zwischen den abgewandten, ersten Enden der Lagerarme 58c, 60c vorhanden ist.

Das Kinematikmodul 34c umfasst eine zweite Hebeleinheit 68c. Die zweite Hebeleinheit 68c ist zwischen dem Sitzboden 28c und der ersten Hebeleinheit 56c angeordnet. Die zweite Hebeleinheit 68c ist dazu vorgesehen, den Sitzbodens 28c mit der ersten Hebeleinheit 56c bewegungstechnisch zu koppeln. Die zweite Hebeleinheit 68c weist einen ersten Lagerarm 70c und einen zweiten Lagerarm 72c auf. Die Lagerarme 70c, 72c sind als Hebelarme ausgebildet. Die zwei Lagerarme 70c, 72c sind über einer Lagerstelle 74c an ihren zweiten Enden gelenkig miteinander verbunden. Der erste Lagerarm 70c ist mit einem ersten Ende mit dem Sitzboden 28c gelenkig gekoppelt. Der erste Lagerarm 70c weist eine zusätzliche Lagerstelle 76c auf, über die der Lagerarm 70c schwenkbar an dem nicht näher dargestellten Sitzteiler angebunden ist. Die Lagerstelle 76c ist im Wesentlichen mittig zwischen dem ersten und zweiten Ende des Lagerarms 70c angeordnet. Der zweite Lagerarm 72c der zweiten Hebeleinheit 68c ist gelenkig an die Lagerstelle 62c der ersten Hebeleinheit 56c angebunden. Durch eine Bewegung des zweiten Lagerarms 72c der zweiten Hebeleinheit 68c kann die erste Hebeleinheit 56c verstellt werden. Das Kinematikmodul 34c umfasst einen Betätigungsmechanismus 42c, der zur Verstellung der Rückenlehne 24b zwischen der normalen Sitzposition und der weiteren aufrechten Sonderposition vorgesehen ist. Der Betätigungsmechanismus 42c ist insbesondere von den beiden Hebeleinheiten 68c, dem Federelement 66c und dem Sitzboden 28c gebildet. Insbesondere ist der Betätigungsmechanismus 42c zumindest teilweise von dem Kinematikmodul 34c ausgebildet.

In einem unbelasteten Zustand des Flugzeugsitzes 10c, also wenn kein Passagier auf dem Flugzeugsitz 10c, insbesondere dem Sitzboden 28c sitzt, ist das Kinematikmodul 34c dazu vorgesehen, den Flugzeugsitz 10c automatisch in die weitere aufrechte Sonderstellung zu verstellen (siehe Figur 8). Insbesondere ist das Federelement 66c dazu vorgesehen, die beiden ersten Enden der Lagerarme 58c, 60c der ersten Hebeleinheit 56c auseinander zu drücken, wodurch das untere Ende der Rückenlehne 24c nach hinten, von dem Sitzbauteil 52c weg gedrückt wird, wodurch insbesondere ein oberes Ende der Rückenlehne 24c um die Rückenlehnenlagerstelle 26c nach vorne in die aufrechte Sonderstellung gedrückt wird. In einem belasteten Zustand, also insbesondere in einem Zustand, in dem ein Passagier auf dem Sitzboden 28c sitzt, wird der erste Lagerarm 70 der zweiten Hebeleinheit 68c um die Lagerstelle 76c relativ zu dem Sitzteiler geschwenkt. Dadurch wird insbesondere ein zweites Ende des ersten Lagerarms 70c, an dem der zweite Lagerarm 72c angebunden ist, nach oben, von der Aufständerebene weg gezogen. Dadurch werden die zwei Lagerarme 58c, 60c der ersten Hebeleinheit 56c zueinander verschwenkt, wodurch sich ein Abstand zwischen den beiden ersten Enden der beiden Lagerarme 58c, 60c verkürzt. Dadurch wird die Rückenlehne 26c mit ihrem unteren Ende nach vorne gezogen und dadurch insbesondere nach hinten verschwenkt und in die normale, aufrechte Sitzstellung gebracht. Durch die Verschwenkung der beiden Lagerarme 58c, 60c der ersten Hebeleinheit 56c wird das Federelement 66c gestaucht und dadurch Federenergie gespeichert. Nach Wegfallen der Kraft durch den Passagier, also wenn dieser von dem Flugzeugsitz 10c aufsteht, werden die Lagerarme 58c, 60c der ersten Hebeleinheit 56c durch die gespeicherte Federkraft des Federelements 66c auseinander gedrückt und die Rückenlehne 24c über die erste Hebeleinheit 56c und die zweite Hebeleinheit 68c wieder in die aufrechte Sonderstellung gedrückt.

In der Figur 7 ist ein viertes Ausführungsbeispiel einer Flugzeugsitzvorrichtung gezeigt. Die Flugzeugsitzvorrichtung ist dabei Teil eines Flugzeugsitzes 10d. Der Flugzeugsitz 10d ist in einem montierten Zustand in einer Flugzeugkabine eines Flugzeugs aufgeständert.

Die Flugzeugsitzvorrichtung weist eine Aufständereinheit auf. Mittels der Aufständereinheit ist der Flugzeugsitz 10d auf dem Kabinenboden der Flugzeugkabine aufständerbar. Der Kabinenboden bildet eine Aufständerebene aus. Die Aufständereinheit des Flugzeugsitzes 10d weist zwei Sitzteiler auf. Die Sitzteiler sind jeweils seitlich eines Sitzbereichs des Flugzeugsitzes 10c angeordnet. Die Sitzteiler sind an den Querträgern angeordnet. Die Flugzeugsitzvorrichtung umfasst eine Rückenlehne 24d. Die Rückenlehne 24d ist dabei dazu vorgesehen, dass eine Person, die auf dem Flugzeugsitz 10d sitzt, dessen Teil die Flugzeugsitzvorrichtung ist, ihren Rücken an der Rückenlehne 24d abstützen kann. Die Rückenlehne 24d ist schwenkbar zu der Aufständereinheit angeordnet. Die Rückenlehne 24d ist dabei an den Sitzteilern jeweils über eine Rückenlehnenlagerstelle 26d schwenkbar angelenkt. Die Flugzeugsitzvorrichtung umfasst einen Sitzboden 28d. Der Sitzboden 28d bildet eine Sitzfläche 30d des Flugzeugsitzes aus. Der Sitzboden 28d ist mit der Rückenlehne 24d gekoppelt. Der Sitzboden 28d ist direkt mit der Rückenlehne 24d gekoppelt. Die Rückenlehne 24d und der Sitzboden 28d sind gelenkig miteinander verbunden.

Die Flugzeugsitzvorrichtung umfasst ein Kinematikmodul 34d, das zur Verstellung des Flugzeugsitzes 10d in unterschiedliche Stellungen vorgesehen ist. Mittels des Kinematikmoduls 34d kann der Flugzeugsitz 10d durch einen Benutzer, insbesondere durch einen Passagier, in unterschiedliche Stellungen verstellt werden. Der Flugzeugsitz 10d kann mittels des Kinematikmoduls 34d in eine normale, aufrechte Sitzstellung gestellt werden. In der normalen, aufrechten Sitzstellung ist der Flugzeugsitz 10d in einer TTL-Stellung, in der ein Passagier im Wesentlichen aufrecht in dem Flugzeugsitz 10d sitzen kann. Der Flugzeugsitz 10d kann mittels des Kinematikmoduls 34d in eine weitere aufrechte Sonderstellung gestellt werden. In der weiteren aufrechten Sonderstellung ist der Flugzeugsitz 10d aufrechter ausgerichtet als in der aufrechten Sitzstellung. Die aufrechte Sonderstellung des Flugzeugsitzes 10d ist nicht als eine vorgesehene Sitzstellung ausgebildet. Die aufrechte Sonderstellung des Flugzeugsitzes 10d ist als eine Stellung des Flugzeugsitzes 10d ausgebildet, in der der Flugzeugsitz 10d in der Sitzrichtung 32d eine möglichst kleine Erstreckung aufweist.

Das Kinematikmodul 34d umfasst eine Aktuatorvorrichtung 78d. Die Aktuatorvorrichtung 78d ist dazu vorgesehen, zumindest einen Teil einer Verstellkraft zur Verstellung der Rückenlehne 24d zwischen seinen unterschiedlichen Sitzstellungen bereitzustellen.

Mittels der Aktuatorvorrichtung 78d kann die Rückenlehne 24d zwischen den verschiedenen Stellungen, insbesondere der aufrechten Sitzstellung, der aufrechten Sonderstellung und einer Komfortstellung verstellt werden. Die Aktuatorvorrichtung 78d weist ein doppeltes Hydrolockelement 80d auf. Das doppelte Hydrolockelement 80d ist als eine doppelte betätigbare Gasdruckfeder ausgebildet. Das Hydrolockelement 80d weist einen zylinderförmigen Grundkörper 82d auf, in dem zwei Gasdruckkolben 84d, 86d unabhängig voneinander gelagert sind. Die beiden Gasdruckkolben 84d, 86d sind unabhängig voneinander betätigbar. Die Gasdruckkolben 84d, 86d sind jeweils axial verschiebbar in dem Grundkörper gelagert. Die Gasdruckkolben 84d, 86d stehen vorzugsweise insbesondere auf zwei gegenüberliegenden Längsenden aus dem Grundkörper des Hydrolockelements 80d heraus. Der erste Gasdruckkolben 84d ist zur Verstellung der Rückenlehne 24d zwischen einer aufrechten Sitzposition und einer Komfortposition vorgesehen. Der erste Gasdruckkolben 84d ist mit einem dem Grundkörper 82d abgewandten Ende an der Aufständereinheit fix gelagert. Die Aktuatorvorrichtung 78d weist ein erstes Betätigungselement 88d auf, das zur Betätigung des ersten Gasdruckkolbens 84d vorgesehen ist. Das Betätigungselement 88d ist vorzugsweise als ein Bowdenzug ausgebildet, der von einem Passagier mittels eines in einem Sitzbereich des Flugzeugsitzes 10d, vorzugsweise in einer Armlehne des Flugzeugsitzes 10d angeordneten Bedienelement betätigt werden kann. Der zweite Gasdruckkolben 86d ist zur Verstellung der Rückenlehne 24d in die aufrechte Sonderstellung vorgesehen. Der zweite Gasdruckkolben 86d ist mit einem dem Grundkörper 82d abgewandten Ende an der Rückenlehne 24d angebunden. Die Aktuatorvorrichtung 78d weist ein zweites Betätigungselement 90d auf, das zur Betätigung des zweiten Gasdruckkolbens 86d vorgesehen ist. Das Betätigungselement 88d ist vorzugsweise als ein Bowdenzug ausgebildet, der von einem Bedienelement betätigt wird, das vorzugsweise durch eine auf den Sitzboden 28d wirkende Sitzkraft betätigt wird. Durch eine auf den Sitzboden 28d wirkende Sitzkraft wird das Betätigungselement 88d betätigt und gibt eine Verstellung der Rückenlehne 24d von der aufrechten Sonderstellung in die aufrechte Sitzstellung frei. Eine Verstellkraft wird dabei vorzugsweise von einer Abstützkraft gebildet, die von dem auf dem Flugzeugsitz 10d sitzenden Passagier auf die Rückenlehne 24d ausgeübt wird. Bei einem Wegfall der Sitzkraft auf das Bedienelement des Betätigungselements 88d wird die Rückenlehne 24d vorzugsweise automatisch zurück in die aufrechte Sonderposition verschwenkt.

Grundsätzlich wäre es auch denkbar, dass die Aktuatorvorrichtung 78d zwei voneinander unabhängige Hydrolockelemente mit jeweils nur einem Gasdruckkolben aufweist. Grundsätzlich wäre es ebenso denkbar, dass die Aktuatorvorrichtung 78d einen oder zwei elektrische Aktuatoren anstatt der Hydrolockelemente aufweist. Grundsätzlich ist es ebenso denkbar, dass die Betätigungselemente von elektrischen Aktuatoren gebildet sind, die durch von einem Passagier betätigbare Bedienelemente oder durch elektronische Sensoren, wie beispielsweise einem Gewichtssensor, einem Wärmesensor oder einem lichtsensitiven Sensor, angesteuert werden. Grundsätzlich wäre also eine rein elektrische Auslösung der Verstellung zwischen der Komfortstellung, der aufrechten Sitzstellung und der aufrechten Sonderstellung mittels elektrischer oder elektronischer Aktuatoren, sowie elektrischer oder elektronischer Bedienelemente auch denkbar. Insbesondere könnte dabei eine Verstellung zwischen der aufrechten Sonderposition und der aufrechten Sitzstellung automatisch durch einen Sensor ausgelöst werden, der sensiert, ob ein Passagier auf dem entsprechenden Flugzeugsitz 10d sitzt. Grundsätzlich wäre es bei einer elektrischen oder elektronischen Steuerung der Flugzeugsitze 10d zwischen den unterschiedlichen Stellungen auch denkbar, dass mehrere Flugzeugsitze zusammen von einem Flugpersonal ausgelöst verstellt werden können.

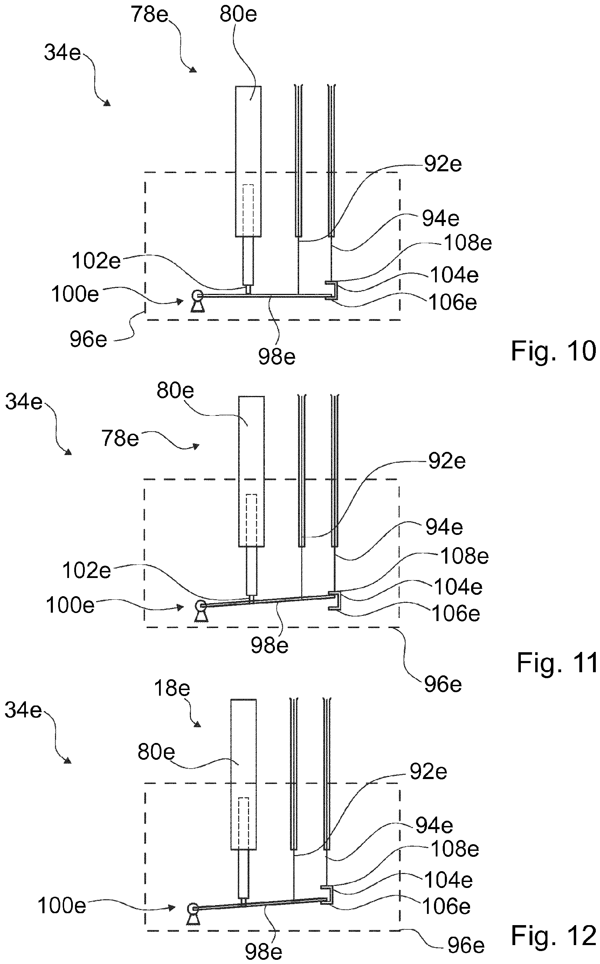

In den Figuren 10 bis 11 ist ein fünftes Ausführungsbeispiel einer erfindungsgemäßen Flugzeugsitzvorrichtung gezeigt. Die Flugzeugsitzvorrichtung ist dabei Teil eines nicht näher dargestellten Flugzeugsitzes. Der Flugzeugsitz ist vorzugsweise identisch zu den Flugzeugsitzen der vorhergehenden Ausführungsbeispiele ausgebildet. Der Flugzeugsitz umfasst einen Sitzboden und eine Rückenlehne. Die Rückenlehne ist schwenkbar zu einer Aufständereinheit angeordnet.

Die Flugzeugsitzvorrichtung umfasst ein Kinematikmodul 34e, das zur Verstellung des Flugzeugsitzes in unterschiedliche Stellungen vorgesehen ist. Mittels des Kinematikmoduls 34e kann der Flugzeugsitz durch einen Benutzer, insbesondere durch einen Passagier, in unterschiedliche Stellungen verstellt werden. Der Flugzeugsitz kann mittels des Kinematikmoduls 34e in eine normale, aufrechte Sitzstellung gestellt werden. In der normalen, aufrechten Sitzstellung ist der Flugzeugsitz in einer TTL-Stellung, in der ein Passagier im Wesentlichen aufrecht in dem Flugzeugsitz sitzen kann. Der Flugzeugsitz kann mittels des Kinematikmoduls 34d in eine weitere aufrechte Sonderstellung gestellt werden. In der weiteren aufrechten Sonderstellung ist der Flugzeugsitz aufrechter ausgerichtet als in der aufrechten Sitzstellung. Die aufrechte Sonderstellung des Flugzeugsitzes ist nicht als eine vorgesehene Sitzstellung ausgebildet. Die aufrechte Sonderstellung des Flugzeugsitzes ist als eine Stellung des Flugzeugsitzes ausgebildet in der der Flugzeugsitz in der Sitzrichtung 32d eine möglichst kleine Erstreckung aufweist.

Das Kinematikmodul 34e umfasst eine Aktuatorvorrichtung 78e. Die Aktuatorvorrichtung 78e ist dazu vorgesehen, zumindest einen Teil einer Verstellkraft zur Verstellung der Rückenlehne zwischen seinen unterschiedlichen Sitzstellungen bereitzustellen. Die Aktuatorvorrichtung umfasst ein Hydrolockelement 80e. Das Hydrolockelement 80d ist als eine Gasdruckfeder ausgebildet. Zur Betätigung des Hydrolockelements 80d weist das Kinematikmodul 34e einen Betätigungsmechanismus 42e auf. Der Betätigungsmechanismus 42e umfasst zwei Betätigungselemente 92e, 94e. Die Betätigungselemente 92e, 94e sind als Seilzüge, insbesondere als Bowdenzüge ausgebildet. Der Betätigungsmechanismus 42e weist eine Schaltbox 96e auf. Die Schaltbox 96e umfasst einen drehbar gelagerten Betätigungshebel 98e. Der Betätigungshebel 98e ist insbesondere mit einem ersten Ende über ein Drehlager 100e schwenkbar in der Schaltbox 96e befestigt. Der Betätigungshebel 98e ist dazu vorgesehen, das Hydrolockelement 80e zu betätigen. Der Betätigungshebel 98e ist insbesondere dazu vorgesehen, einen Betätigungspin 102e des Hydrolokelements 80 zu betätigen.

Das erste Betätigungselement 92e ist zur Verstellung der Rückenlehne zwischen der Komfortstellung und der aufrechten Sitzstellung vorgesehen. Das erste Betätigungselement 92e ist in einem dem zweiten Ende zugewandten Bereich an den Betätigungshebel 98e angebunden. Das erste Betätigungselement 92e ist beanstandet zu dem zweiten Ende des Betätigungshebels 98e an dem Betätigungshebel 98e angebunden. Das zweite Betätigungselement 94e ist zur Verstellung der Rückenlehne zwischen der aufrechten Sitzstellung und der aufrechten Sonderstellung vorgesehen. Das zweite Betätigungselement 94e ist an dem zweiten Ende des Betätigungshebels 98e angeordnet. Die Schaltbox 96e umfasst ein Schieberelement 104e. Das Schieberelement 104e ist fest mit dem zweiten Betätigungselement 94e verbunden. Das Schieberelement 104e ist insbesondere dazu vorgesehen, den Betätigungshebel 98e bei einer Betätigung durch das erste Betätigungselement 92e auf eine definierte Auslenkung zu beschränken und insbesondere keine Maximalauslenkung zuzulassen. Weiter ist das Schieberelement 104e dazu vorgesehen, den Betätigungshebel 98e bei einer Betätigung durch das zweite Betätigungselement 94e mitzunehmen und in eine Maximalauslenkung auszulenken. Das Schieberelement 104e ist axial verschiebbar in der Schaltbox 96e gelagert. Das Schieberelement 104e ist direkt durch das zweite Betätigungselement 94e betätigbar. Das Schieberelement 104e weist einen ersten Anschlag 106e und einen zweiten Anschlag 108e für den Betätigungshebel 98e auf. Der Betätigungshebel 98e ist zwischen den beiden Anschlägen 106e, 108e angeordnet. In einem Normalbetriebszustand, in dem ein Passagier auf dem Flugzeugsitz sitzt, liegt der Betätigungshebel 98e an dem unteren Anschlag 106e an. Zur Verstellung der Rückenlehne zwischen der aufrechten Sitzstellung und der Komfortstellung wird der Betätigungshebel 98e durch das erste Betätigungselement 92e ausgelenkt. Der Betätigungshebel 98e kann durch das erste Betätigungselement soweit ausgelenkt werden, bis er mit seinem hinteren Ende an dem oberen Anschlag 108e des Schieberelements 104e anschlägt (siehe Figur 11). Das Schieberelement 104e verschiebt sich dabei insbesondere nicht. In dieser Stellung betätigt der Betätigungshebel 98e den Betätigungspin 102 des Hydrolockelements 80 so, dass die Rückenlehne zwischen der aufrechten Sitzstellung und der Komfortstellung verstellbar ist. Das zweite Betätigungselement 94e wird insbesondere ausgelöst, wenn keine Kraft, insbesondere keine Sitzkraft, auf den Sitzboden wirkt. Das zweite Betätigungselement 94e wird also ausgelöst, wenn ein Passagier von dem Flugzeugsitz aufsteht. Wird das zweite Betätigungselement 94e ausgelöst, nimmt das Schieberelement 104e mit seinem ersten, untere Anschlag 106e den Betätigungshebel 98e mit. Mittels des Schieberelements 104e kann der Betätigungshebel 98e bis in eine Maximalverstellung gebracht werden. In der Maximalverstellung betätigt der Betätigungshebel 98e den Betätigungspin 102e des Hydrolockelements 80e in einer solchen Weise, dass die Rückenlehne 24e bis in die aufrechte Sonderposition zurückgestellt wird. Dadurch wird die Rückenlehne automatisch bei einem Wegfall einer auf den Sitzboden wirkenden Sitzkraft in die aufrechte Sonderposition verstellt.

### Bezugszeichen

- 10: Flugzeugsitz
- 12: Aufständereinheit
- 14: Aufständerebene
- 16: Sitzfuß
- 18: Querträger
- 20: Querträger
- 22: Sitzteiler
- 24: Rückenlehne
- 26: Rückenlehnenlagerstelle
- 28: Sitzboden
- 30: Sitzfläche
- 32: Sitzrichtung
- 34: Kinematikmodul
- 36: Weiterer Flugzeugsitz
- 38: Reclineeinheit
- 40: Gasdruckfeder
- 42: Betätigungsmechanismus
- 44: Sperrvorrichtung
- 46: Betätigungselement
- 48: Verzögerungseinheit
- 50: Abstand
- 52: Sitzbauteil
- 54: Rückenlehnenaufschlagssicherungsvorrichtung
- 56: Hebeleinheit
- 58: Lagerarm
- 60: Lagerarm
- 62: Lagerstelle
- 64: Exzenterelement
- 66: Federelement
- 68: Hebeleinheit
- 70: Lagerarm
- 72: Lagerarm
- 74: Lagerstelle
- 76: Lagerstelle
- 78: Aktuatorvorrichtung
- 80: Hydrolockelement
- 82: Grundkörper
- 84: Gasdruckkolben
- 86: Gasdruckkolben
- 88: Betätigungselement
- 90: Betätigungselement
- 92: Betätigungselement
- 94: Betätigungselement
- 96: Schaltbox
- 98: Betätigungshebel
- 100: Drehlager
- 102: Betätigungspin
- 104: Schieberelement
- 106: Anschlag
- 108: Anschlag

## Patentansprüche

1. Flugzeugsitzvorrichtung, mit wenigstens einer Aufständereinheit (12a; 12b; 12c), mit wenigstens einer mit der Aufständereinheit (12a; 12b; 12c) gekoppelten Rückenlehne (24a; 24b; 24c; 24d), mit zumindest einem, mit der Aufständereinheit (12a; 12b; 12c) und/oder der Rückenlehne (24a; 24b; 24c; 24d) gekoppelten Sitzboden (28a; 28b; 28c; 28d), und mit wenigstens einem Kinematikmodul (34a; 34b), das dazu vorgesehen ist, die Rückenlehne (24a; 24b; 24c; 24d) zwischen zumindest einer normalen, im Wesentlichen aufrechten Sitzposition und einer Komfortposition zu verstellen, wobei das Kinematikmodul (34a; 34b) dazu vorgesehen ist, die Rückenlehne (24a; 24b; 24c; 24d) in wenigstens einem Betriebszustand in eine weitere, von der aufrechten Sitzposition unterschiedliche aufrechte Sonderposition zu verstellen, in der die Rückenlehne (24a; 24b; 24c; 24d) zumindest in einem Teilbereich im Vergleich zu der normalen aufrechten Sitzposition nach vorne verstellt ist, **dadurch gekennzeichnet, dass** das Kinematikmodul (34a; 34b; 34c; 34d; 34e) dazu vorgesehen ist, die Rückenlehne (24a; 24b: 24c; 24d) in einem unbenutzten Betriebszustand selbsttätig in die aufrechte Sonderposition zu verstellen.

2. Flugzeugsitzvorrichtung nach Anspruch 1, **dadurch gekennzeichnet, dass** die Rückenlehne (24a; 24b; 24c; 24d) in der aufrechten Sonderposition steiler ausgerichtet ist als in der normalen aufrechten Sitzposition.

3. Flugzeugsitzvorrichtung nach Anspruch 1 oder 2, **dadurch gekennzeichnet, dass** das Kinematikmodul (34a; 34b; 34c; 34d; 34e) dazu vorgesehen ist, die Rückenlehne (24a; 24b; 24c; 24d) in der aufrechten Sonderposition im Wesentlichen senkrecht zu einer Aufständerebene (14a; 14b) auszurichten.

4. Flugzeugsitzvorrichtung nach einem der vorhergehenden Ansprüche, **dadurch gekennzeichnet, dass** das Kinematikmodul (34a; 34b) dazu vorgesehen ist, den Sitzboden (28a; 28b; 28c; 28d) zwischen zumindest einer normalen, im Wesentlichen aufrechten Sitzposition und einer Komfortposition zu verstellen, wobei das Kinematikmodul (34a; 34b) dazu vorgesehen ist, den Sitzboden (28a; 28b; 28c; 28d) in wenigstens einem Betriebszustand in eine weitere, von der aufrechten Sitzposition unterschiedliche aufrechte Sonderposition zu verstellen, in der der Sitzboden (28a; 28b; 28c; 28d) zumindest verschwenkt ist, wobei das Kinematikmodul (34a; 34b) dazu vorgesehen ist, den Sitzboden (28a; 28b) bei einer Verstellung von der normalen aufrechten Sitzposition in die aufrechte Sonderposition in seiner Höhe und/oder seinem Winkel relativ zu einer Aufständerebene (14a; 14b) zu verstellen.

5. Flugzeugsitzvorrichtung nach einem der vorhergehenden Ansprüche, **dadurch gekennzeichnet, dass** das Kinematikmodul (34a; 34b; 34c; 34d; 34e) dazu vorgesehen ist, die Rückenlehne (24a; 24b) bei einem Hinsetzten eines Passagiers automatisch in die eine normale, im Wesentlichen aufrechten Sitzposition zu verstellen.

6. Flugzeugsitzvorrichtung nach einem der vorhergehenden Ansprüche, **dadurch gekennzeichnet, dass** das Kinematikmodul (34a; 34b) einen Betätigungsmechanismus (42a; 42b) aufweist, der zur Verstellung der Rückenlehne (24a; 24b) zwischen der normalen Sitzposition und der weiteren aufrechten Sonderposition vorgesehen ist.

7. Flugzeugsitzvorrichtung nach Anspruch 6, **dadurch gekennzeichnet, dass** das der Betätigungsmechanismus (42a; 42b) zur Verstellung der Rückenlehne (24a; 24b) von der Komfortposition in die weitere aufrechte Sonderposition vorgesehen ist.

8. Flugzeugsitzvorrichtung nach Anspruch 6, **dadurch gekennzeichnet, dass** der Betätigungsmechanismus (42a; 42b) als ein selbsttätiger Mechanismus ausgebildet ist, der zumindest durch eine auf den Sitzboden (28a; 28b) wirkende Sitzkraft und/oder durch eine auf die Rückenlehne (24a; 24b) wirkende Kraft betätigt wird.

9. Flugzeugsitzvorrichtung nach einem der vorhergehenden Ansprüche, **dadurch gekennzeichnet, dass** das Kinematikmodul (34a; 34b) eine Reclineeinheit (38a) aufweist, die dazu vorgesehen ist, die Rückenlehne (24a; 24b) zwischen der normalen aufrechten Sitzposition in die Komfortposition zu verstellen.

10. Flugzeugsitzvorrichtung nach Anspruch 6 und 9, **dadurch gekennzeichnet, dass** die Reclineeinheit (38a) und der Betätigungsmechanismus (42a) des Kinematikmoduls (34a) zumindest teilweise einstückig miteinander ausgebildet sind.

11. Flugzeugsitzvorrichtung nach einem der vorhergehenden Ansprüche, **dadurch gekennzeichnet, dass** das Kinematikmodul (34c) zumindest eine Rückenlehnenaufschlagssicherungsvorrichtung (54c) aufweist, die durch eine teilweise Entkopplung der Rückenlehne (24c) von einem Sitzbauteil (52d) dazu vorgesehen ist, Aufschlagskräfte auf die Rückenlehne (24c) zumindest in einem Crashfall zumindest teilweise zu reduzieren.

12. Flugzeugsitzvorrichtung nach einem der vorhergehenden Ansprüche, **dadurch gekennzeichnet, dass** das Kinematikmodul (34d) zumindest eine Aktuatorvorrichtung (78d) aufweist, die zur Bereitstellung einer Verstellkraft zur Verstellung der Rückenlehne (24d) zumindest zwischen der aufrechten Sonderstellung und der aufrechten Sitzstellung vorgesehen ist.

13. Flugzeugsitz mit zumindest einem Sitzbauteil, insbesondere einer Rückenlehne (24a; 24b) und/oder einem Sitzboden (28a; 28b), und mit einer Flugzeugsitzvorrichtung nach einem der vorhergehenden Ansprüche.

## Claims

1. Aircraft seat device,
with at least one mounting unit (12a; 12b; 12c),
with at least one backrest (24a; 24b; 24c; 24d) that is coupled with the mounting unit (12a; 12b; 12c),
with at least one seat bottom (28a; 28b; 28c; 28d) that is coupled with the mounting unit (12a; 12b; 12c) and/or with the backrest (24a; 24b; 24c; 24d), and
with at least one kinematics module (34a; 34b), which is configured to adjust the backrest (24a; 24b; 24c; 24d) between at least a normal, substantially upright sitting position and a comfort position,
the kinematics module (34a; 34b) being configured, in at least one operation state, to adjust the backrest (24a; 24b; 24c; 24d) into a further, special upright position, which is different from the upright sitting position and in which the backrest (24a; 24b; 24c; 24d) is at least in a subregion adjusted frontwards in comparison to the normal upright sitting position,
**characterised in that** the kinematics module (34a; 34b; 34c; 34d; 34e) is configured, in a non-use operation state, to adjust the backrest (24a; 24b; 24c; 24d) automatically into the special upright position.

2. Aircraft seat device according to claim 1,
**characterised in that** the backrest (24a; 24b; 24c; 24d) is in the special upright position oriented at a steeper angle than in the normal upright sitting position.

3. Aircraft seat device according to claim 1 or 2,
**characterised in that** the kinematics module (34a; 34b; 34c; 34d; 34e) is configured to align the backrest (24a; 24b; 24c; 24d) in the special upright position substantially perpendicular to a mounting plane (14a; 14b).

4. Aircraft seat device according to one of the preceding claims,
**characterised in that** the kinematics module (34a; 34b) is configured to adjust the seat bottom (28a; 28b; 28c; 28d) between at least a normal, substantially upright sitting position and a comfort position,
the kinematics module (34a; 34b) being configured, in at least one operation state, to adjust the seat bottom (28a; 28b; 28c; 28d) into a further, special upright position which differs from the upright sitting position and in which the seat bottom (28a; 28b; 28c; 28d) is at least pivoted,
wherein the kinematics module (34a; 34b) is configured, in an adjustment from the normal upright sitting position into the special upright position, to adjust the seat bottom (28a; 28b) with regard to its height and/or to its angle relative to a mounting plane (14a; 14b).

5. Aircraft seat device according to one of the preceding claims,
**characterised in that** the kinematics module (34a; 34b; 34c; 34d; 34e) is configured, when a passenger sits down, to automatically adjust the backrest (24a; 24b) into the normal, substantially upright sitting position.

6. Aircraft seat device according to one of the preceding claims,
**characterised in that** the kinematics module (34a; 34b) comprises an actuation mechanism (42a; 42b), which is configured for an adjustment of the backrest (24a; 24b) between the normal sitting position and the further, special upright position.

7. Aircraft seat device according to claim 6,
**characterised in that** the actuation mechanism (42a; 42b) is configured for an adjustment of the backrest (24a; 24b) from the comfort position into the further, special upright position.

8. Aircraft seat device according to claim 6,
**characterised in that** the actuation mechanism (42a; 42b) is realized as an automatic mechanism which is actuated at least by a sitting force that acts onto the seat bottom (28a; 28b) and/or by a force that acts onto the backrest (24a; 24b).

9. Aircraft seat device according to one of the preceding claims,
**characterised in that** the kinematics module (34a; 34b) comprises a reclining unit (38a), which is configured to adjust the backrest (24a; 24b) between the normal upright sitting position into the comfort position.

10. Aircraft seat device according to claims 6 and 9,
**characterised in that** the reclining unit (38a) and the actuation mechanism (42a) of the kinematics module (42a) are realized at least partially integrally with each other.

11. Aircraft seat device according to one of the preceding claims,
**characterised in that** the kinematics module (34c) comprises at least one backrest impact safeguarding device (54c) which is configured, by a partial uncoupling of the backrest (24c) from a seat component (52d), to at least partially reduce impact forces onto the backrest (24c), at least in case of a crash.

12. Aircraft seat device according to one of the preceding claims,
**characterised in that** the kinematics module (34d) comprises at least one actuator device (78d) configured to provide an adjusting force for an adjustment of the backrest (24d) at least between the special upright position and the upright sitting position.

13. Aircraft seat with at least one seat component, in particular a backrest (24a; 24b) and/or a seat bottom (28a; 28b), and
with an aircraft seat device according to one of the preceding claims.

## Revendications

1. Dispositif de siège d'avion,
comprenant au moins une unité de structure élevée (12a ; 12b ; 12c), comprenant au moins un dossier (24a ; 24b ; 24c ; 24d) couplé avec l'unité de structure élevée (12a ; 12b ; 12c),
comprenant au moins un fond de siège (28a ; 28b ; 28c ; 28d) couplé avec l'unité de structure élevée (12a ; 12b ; 12c) et/ou avec le dossier (24a ; 24b ; 24c ; 24d) et comprenant au moins un module cinématique (34a ; 34b) conçu pour ajuster le dossier (24a ; 24b ; 24c ; 24d) entre au moins une position d'assise normale, sensiblement debout, et une position de confort,
le module cinématique (34a ; 34b) étant conçu, en au moins un état de fonctionnement, pour ajuster le dossier (24a ; 24b ; 24c ; 24d) dans une autre position debout spéciale, qui diffère de la position d'assise debout et dans laquelle le dossier (24a ; 24b ; 24c ; 24d) est ajusté au moins dans une sub-zone vers l'avant en comparaison de la position d'assise debout normale,
**caractérisé en ce que** le module cinématique (34a ; 34b ; 34c ; 34d ; 34e) est conçu, en état non-utilisé, pour ajuster le dossier (24a ; 24b ; 24c ; 24d) automatiquement dans la position debout spéciale.

2. Dispositif de siège d'avion selon la revendication 1,
**caractérisé en ce que** le dossier (24a ; 24b ; 24c ; 24d) est orienté de façon plus raide dans la position debout spéciale que dans la position d'assise debout normale.

3. Dispositif de siège d'avion selon la revendication 1 ou 2,
**caractérisé en ce que** le module cinématique (34a ; 34b ; 34c ; 34d ; 34e) est conçu pour aligner le dossier (24a ; 24b ; 24c ; 24d) dans la position debout spéciale sensiblement perpendiculairement à un plan de structure élevée (14a ; 14b).

4. Dispositif de siège d'avion selon l'une des revendications précédentes,
**caractérisé en ce que** le module cinématique (34a ; 34b) est conçu pour ajuster le fond de siège (28a ; 28b ; 28c ; 28d) entre au moins une position d'assise normale, sensiblement debout, et une position de confort,
où le module cinématique (34a ; 34b) est conçu, en au moins un état de fonctionnement, pour ajuster le fond de siège (28a ; 28b ; 28c ; 28d) dans une autre position debout spéciale qui diffère de la position d'assise debout et dans laquelle le fond de siège (28a ; 28b ; 28c ; 28d) est au moins pivoté,
le module cinématique (34a ; 34b) étant conçu pour ajuster le fond de siège (28a ; 28b), en l'ajustant de la position d'assise debout normale dans la position debout spéciale, en termes de son hauteur et/ou son angle par rapport à un plan de structure élevée (14a ; 14b).

5. Dispositif de siège d'avion selon l'une des revendications précédentes,
**caractérisé en ce que** le module cinématique (34a ; 34b ; 34c ; 34d ; 34e) est conçu, si un passager s'assoit, pour ajuster le dossier (24a ; 24b) automatiquement dans la position d'assise normale, sensiblement debout.

6. Dispositif de siège d'avion selon l'une des revendications précédentes,
**caractérisé en ce que** le module cinématique (34a ; 34b) comprend un mécanisme d'actionnement (42a ; 42b) conçu pour l'ajustage du dossier (24a ; 24b) entre la position d'assise normale et l'autre position debout spéciale.

7. Dispositif de siège d'avion selon la revendication 6,
**caractérisé en ce que** le mécanisme d'actionnement (42a ; 42b) est conçu pour l'ajustage du dossier (24a ; 24b) de la position de confort dans l'autre position debout spéciale.

8. Dispositif de siège d'avion selon la revendication 6,
**caractérisé en ce que** le mécanisme d'actionnement (42a ; 42b) est réalisé comme mécanisme automatique actionné au moins par une force d'assise agissant sur le fond de siège (28a ; 28b) et/ou par une force agissant sur le dossier (24a ; 24b).

9. Dispositif de siège d'avion selon l'une des revendications précédentes,
**caractérisé en ce que** le module cinématique (34a ; 34b) comprend une unité d'inclination (38a) qui est conçue pour ajuster le dossier (24a ; 24b) entre la position d'assise debout normale dans la position de confort.

10. Dispositif de siège d'avion selon les revendications 6 et 9,
**caractérisé en ce que** l'unité d'inclination (38a) et le mécanisme d'actionnement (42a) du module cinématique (34a) sont réalisés au moins partiellement intégralement l'une avec l'autre.

11. Dispositif de siège d'avion selon l'une des revendications précédentes,
**caractérisé en ce que** le module cinématique (34c) comprend au moins un dispositif sauvegarde-impact de dossier (54c) qui est conçu, en découplant le dossier (24c) partiellement d'un composant de siège (52d), pour au moins partiellement réduire des forces d'impact sur le dossier (24c) au moins en cas d'un crash.

12. Dispositif de siège d'avion selon l'une des revendications précédentes,
**caractérisé en ce que** le module cinématique (34d) comprend au moins un dispositif d'actionnement (78d) destiné à pourvoir une force d'ajustage pour l'ajustage du dossier (24d) au moins entre la position debout spéciale et la position d'assise debout.

13. Siège d'avion avec au moins un composant de siège, en particulier un dossier (24a ; 24b) et/ou un fond de siège (28a ; 28b),
et avec un dispositif de siège d'avion selon l'une des revendications précédentes.
